(19) Europäisches Patentamt / European Patent Office / Office européen des brevets

(11) **EP 4 383 865 A1**

(12) **EUROPEAN PATENT APPLICATION**
published in accordance with Art. 153(4) EPC

(43) Date of publication:
**12.06.2024 Bulletin 2024/24**

(21) Application number: **22851967.4**

(22) Date of filing: **26.07.2022**

(51) International Patent Classification (IPC):
**H04W 68/00** (2009.01)   **H04W 72/00** (2023.01)
**H04W 52/02** (2009.01)

(52) Cooperative Patent Classification (CPC):
**H04W 52/02; H04W 68/00; H04W 72/00;**
**Y02D 30/70**

(86) International application number:
**PCT/CN2022/107917**

(87) International publication number:
**WO 2023/011253 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 06.08.2021  CN 202110901344
30.09.2021  CN 202111165827

(71) Applicant: **Datang Mobile Communications Equipment Co., Ltd.**
**Beijing 100085 (CN)**

(72) Inventors:
• **SU, Yuwan**
**Beijing 100085 (CN)**
• **WANG, Jiaqing**
**Beijing 100085 (CN)**
• **CHENG, Fangchen**
**Beijing 100085 (CN)**

(74) Representative: **Maiwald GmbH**
**Engineering**
**Elisenhof**
**Elisenstrasse 3**
**80335 München (DE)**

(54) **METHOD AND APPARATUS FOR TRANSMITTING PAGING EARLY INDICATION, AND DEVICE**

(57)   The present disclosure provides a paging early indication (PEI) transmission method, apparatus and device. The method includes: determining, by a user equipment (UE), a resource location of a paging early indication based on at least one of a target Synchronization Signal and PBCH block (SSB), a target paging occasion (PO) and a target paging frame (PF), or based on a first frame number; and receiving or detecting at the resource location, by the UE, PEI transmitted by a network device. The PEI is used to indicate an existence situation of paging.

determining, by UE, a resource location of PEI based on at least one of SSB, PO and PF, or based on a first frame number — 11

receiving or detecting at the resource location, by the UE, PEI transmitted by the network device; where the PEI is used to indicate an existence situation of paging — 12

FIG. 1

**Description**

**CROSS-REFERENCE TO RELATED APPLICATION**

The present disclosure claims the priority of Chinese Application No. 202110901344.X filed on August 6, 2021, and the priority of Chinese Application No. 202111165827.4 filed on September 30, 2021, the disclosure of which are incorporated in their entireties by reference herein.

**TECHNICAL FIELD**

The present disclosure relates to the field of communication technologies, and in particular to a paging early indication transmission method, device and apparatus.

**BACKGROUND**

In the 5G New Radio (NR) system, because 5G supports larger bandwidth, higher throughput, more complex services and corresponding more complex processing technologies, power-saving design of terminals becomes very necessary. The power-saving optimized design can save power consumption of the terminals and extend battery life, thus improving users' experience.

In related art, it is supported to use a paging early indication (PEI) in a radio resource control (RRC) idle state as an indication of whether it is needed to monitor Physical Downlink Control Channel (PDCCH) for scheduling paging messages. Specifically, before receiving a paging message, a terminal first receives PEI; if the terminal is indicated to receive subsequent paging messages, the terminal continues to receive the paging message; otherwise, the terminal can enter low power consumption or sleep state, thereby reducing the power consumption of the terminal. In the related art, there is no clear solution on how to determine a resource location of PEI to realize transmission of PEI.

**SUMMARY**

An object of the present disclosure is to provide a paging early indication transmission method, apparatus and device, which can determine resource locations of the PEI, thereby realizing transmission of the PEI.

Embodiments of the present disclosure provide a paging early indication (PEI) transmission method, including:

determining, by a user equipment (UE), a resource location of a paging early indication based on at least one of a target Synchronization Signal and PBCH block (SSB), a target paging occasion (PO) and a target paging frame (PF), or based on a first frame number; and
receiving or detecting at the resource location, by the UE, PEI transmitted by a network device;
wherein the PEI is used to indicate an existence situation of paging.

Optionally, the method further includes: determining at least one of the target SSB, the target PO and the target PF.

Optionally, the determining the target SSB, includes:

determining the target SSB according to a target parameter;
wherein the target parameter includes the target PO or the target PF.

Optionally, the determining the target SSB according to a target parameter, includes:

determining the target SSB according to a location of the target parameter and a distance between the target parameter and the target SSB;
wherein the distance satisfies: greater than Y periods of SSBs and less than or equal to (Y+Y1) periods of SSBs, Y is the number of SSBs between the target SSB and the target parameter, $Y1 \geq 1$.

Optionally, the method further includes determining Y according to at least one of the following:

system message configuration;
broadcast signaling configuration;
agreement;
determined based on a first interval;

determined based on a first offset;
determined according to the number of beams of the SSB;
determined according to the number of beams of the PEI.

Optionally, the determining the target PO or determining the target PF includes one of the following:

determining the target PO or target PF according to a first parameter; wherein the first parameter includes at least one of a total number of PFs in each discontinuous reception (DRX) cycle, the number of POs included in each PF and UE_ID;
determining the target PO or target PF according to a second parameter; wherein the second parameter is the number of POs corresponding to one PEI;
determining the target PO or target PF according to a period of PEI;
when one PEI is corresponding to one PO, the target PO is a PO that the UE needs to monitor, and the target PF is a PF corresponding to the PO that the UE needs to monitor.

Optionally, the target PF is one of multiple PFs corresponding to the PEI.
Optionally, the determining the resource location of the PEI according to at least one of the target SSB, target PO and target PF, includes:

determining the resource location of the PEI according to a resource location of the target SSB, or the target PO or the target PF, and the first offset;
wherein the first offset is an offset between the resource location of the PEI and the resource location of the target SSB, or the target PO or the target PF.

Optionally, the resource location of the PEI includes at least one of the following:

start location of the PEI;
end location of the PEI;
monitoring start location of the PEI;
monitoring end location of the PEI.

Optionally, the method further includes:
when the resource location of the PEI includes the start location of the PEI and/or the monitoring start location of the PEI, determining the end location or monitoring end location of the PEI based on the start location and/or monitoring start location of the PEI as well as duration of the PEI.
Optionally, the first offset is less than a period length of the target SSB; or,
the first offset is proportional to a period of the target SSB.
Optionally, the method further includes:

determining whether the resource location satisfies a first condition;
if the first condition is not satisfied, updating the resource location to be a difference between the resource location and the period of the SSB.

Optionally, the first condition includes: a distance between the resource location and a resource location of the target PO or target PF is greater than or equal to a first interval.
Optionally, the PEI includes X beams, and the resource location of the PEI include: X resource locations corresponding to the PEI of the X beams;
the receiving or detecting at the resource location, by the UE, PEI transmitted by a network device, includes:

when a first resource location of the X resource locations overlaps with a resource location of a first signal, receiving or detecting the PEI at a second resource location;
wherein the second resource location is a first resource location after the first resource location.

Optionally, the method further includes:
determining a first frame number, wherein the first frame number is a frame number of a radio frame where the PEI is located.
Optionally, the method further includes:

determining a first index, wherein the first index is an index of the PEI;

wherein the determining the resource location of the paging early indication based on the first frame number, includes:

determining the resource location of the PEI according to the first frame number and the first index.

Optionally, the determining a first frame number, includes:

determining the first frame number according to a third parameter, wherein the third parameter includes at least one of a second interval, a paging frame offset, DRX cycle, a total number of PFs in each DRX cycle, the number of POs included in each PF, the number of POs corresponding to one PEI, and UE_ID.

Optionally, the first frame number is related to a product of a fourth parameter, a fifth parameter and a sixth parameter;

wherein the fourth parameter is related to at least one of the DRX cycle and the total number of PFs in each DRX cycle;

the fifth parameter is related to at least one of UE ID, the total number of PFs in each DRX cycle, and the sixth parameter;

the sixth parameter is related to at least one of the number of POs corresponding to one PEI and the number of POs included in each PF.

Optionally, a result of modulo operation of a sum of the first frame number, the second interval and the paging frame offset, and the DRX cycle, is equal to a product of the fourth parameter, the fifth parameter and the sixth parameter.

Optionally, the second interval is the number of radio frames between the first frame number and the target PF.

Optionally, the determining the first index, includes:

determining the first index according to a seventh parameter, wherein the seventh parameter includes at least one of: UE_ID, the total number of PFs in each DRX cycle, and the number of POs included in each PF, and the number of POs corresponding to one PEI;

or,

determining the first index based on an index of PO, the number of POs included in each PF, and the number of POs corresponding to one PEI.

Embodiments of the present disclosure provides a paging early indication (PEI) transmission method, including:

determining, by a network device, a resource location of a paging early indication based on at least one of a target Synchronization Signal and PBCH block (SSB), a target paging occasion (PO) and a target paging frame (PF), or based on a first frame number;

transmitting at the resource location, by the network device, a PEI to a user equipment (UE);

wherein the PEI is used to indicate an existence situation of paging.

Optionally, the method further includes: determining at least one of the target SSB, the target PO and the target PF.

Optionally, the determining the target SSB, includes:

determining the target SSB according to a target parameter;

wherein the target parameter includes the target PO or the target PF.

Optionally, the determining the target SSB according to a target parameter, includes:

determining the target SSB according to a location of the target parameter and a distance between the target parameter and the target SSB;

wherein the distance satisfies: greater than Y periods of SSBs and less than or equal to (Y+Y1) periods of SSBs, Y is the number of SSBs between the target SSB and the target parameter, $Y1 \geq 1$.

Optionally, the method further includes determining Y according to at least one of the following:

system message configuration;

broadcast signaling configuration;

agreement;

determined based on a first interval;

determined based on a first offset;

determined according to the number of beams of the SSB;
determined according to the number of beams of the PEI.

Optionally, the determining the target PO or determining the target PF includes one of the following:

determining the target PO or target PF according to a first parameter; wherein the first parameter includes at least one of a total number of PFs in each discontinuous reception (DRX) cycle, the number of POs included in each PF and UE_ID;
determining the target PO or target PF according to a second parameter; wherein the second parameter is the number of POs corresponding to one PEI;
determining the target PO or target PF according to a period of PEI;
when one PEI is corresponding to one PO, the target PO is a corresponding PO when the network device transmits PDCCH scrambled by a paging radio network temporary identifier (P-RNTI) for paging the UE, and the target PF is corresponding PF when the network device transmits PDCCH scrambled by a paging radio network temporary identifier (P-RNTI) for paging the UE.

Optionally, the target PF is one of multiple PFs corresponding to the PEI.
Optionally, the determining the resource location of the PEI according to at least one of the target SSB, target PO and target PF, includes:

determining the resource location of the PEI according to a resource location of the target SSB, or the target PO or the target PF, and the first offset;
wherein the first offset is an offset between the resource location of the PEI and the resource location of the target SSB, or the target PO or the target PF.

Optionally, the resource location of the PEI includes at least one of the following:

start location of the PEI;
end location of the PEI;
monitoring start location of the PEI;
monitoring end location of the PEI.

Optionally, the method further includes:
when the resource location of the PEI includes the start location of the PEI and/or the monitoring start location of the PEI, determining the end location or monitoring end location of the PEI based on the start location and/or monitoring start location of the PEI as well as duration of the PEI.
Optionally, the first offset is less than a period length of the target SSB; or,
the first offset is proportional to a period of the target SSB.
Optionally, the method further includes:

determining whether the resource location satisfies a first condition;
if the first condition is not satisfied, updating the resource location to be a difference between the resource location and the period of the SSB.

Optionally, the first condition includes: a distance between the resource location and a resource location of the target PO or target PF is greater than or equal to a first interval.
Optionally, the PEI includes X beams, and the resource location of the PEI include: X resource locations corresponding to the PEI of the X beams;
the transmitting at the resource location, PEI to the UE, includes:

when a first resource location of the X resource locations overlaps with a resource location of a first signal, transmitting the PEI at a second resource location;
wherein the second resource location is a first resource location after the first resource location.

Optionally, the method further includes:
determining a first frame number, wherein the first frame number is a frame number of a radio frame where the PEI is located.
Optionally, the method further includes:

determining a first index, wherein the first index is an index of the PEI;

wherein the determining the resource location of the paging early indication based on the first frame number, includes:

determining the resource location of the PEI according to the first frame number and the first index.

Optionally, the determining a first frame number, includes:

determining the first frame number according to a third parameter, wherein the third parameter includes at least one of a second interval, a paging frame offset, DRX cycle, a total number of PFs in each DRX cycle, the number of POs included in each PF, the number of POs corresponding to one PEI, and UE_ID.

Optionally, the first frame number is related to a product of a fourth parameter, a fifth parameter and a sixth parameter;

wherein the fourth parameter is related to at least one of the DRX cycle and the total number of PFs in each DRX cycle;

the fifth parameter is related to at least one of UE ID, the total number of PFs in each DRX cycle, and the sixth parameter;

the sixth parameter is related to at least one of the number of POs corresponding to one PEI and the number of POs included in each PF.

Optionally, a result of modulo operation of a sum of the first frame number, the second interval and the paging frame offset, and the DRX cycle, is equal to a product of the fourth parameter, the fifth parameter and the sixth parameter.

Optionally, the second interval is the number of radio frames between the first frame number and the target PF.

Optionally, the determining the first index, includes:

determining the first index according to a seventh parameter, wherein the seventh parameter includes at least one of: UE_ID, the total number of PFs in each DRX cycle, and the number of POs included in each PF, and the number of POs corresponding to one PEI;

or,

determining the first index based on an index of PO, the number of POs included in each PF, and the number of POs corresponding to one PEI.

Embodiment of the present disclosure provides a user equipment (UE), including: a memory, a transceiver and a processor;

wherein the memory is used to store a computer program; the transceiver is used to transmit and receive data under the control of the processor; the processor is used to read the computer programs in the memory and perform the following operations:

determining a resource location of a paging early indication (PEI) based on at least one of a target Synchronization Signal and PBCH block (SSB), a target paging occasion (PO) and a target paging frame (PF), or based on a first frame number; and

receiving or detecting at the resource location, a PEI transmitted by a network device;

wherein the PEI is used to indicate an existence situation of paging.

Optionally, the processor is used to read the computer programs in the memory and perform the following operations:

determining at least one of the target SSB, the target PO and the target PF.

Optionally, the processor is used to read the computer programs in the memory and perform the following operations:

determining the target SSB according to a target parameter;

wherein the target parameter includes the target PO or the target PF.

Optionally, the processor is used to read the computer programs in the memory and perform the following operations:

determining the target SSB according to a location of the target parameter and a distance between the target parameter and the target SSB;

wherein the distance satisfies: greater than Y periods of SSBs and less than or equal to (Y+Y1) periods of SSBs, Y is the number of SSBs between the target SSB and the target parameter, $Y1 \geq 1$;

wherein the method further includes determining Y according to at least one of the following:

system message configuration;
broadcast signaling configuration;
agreement;
determined based on a first interval;
determined based on a first offset;
determined according to the number of beams of the SSB;
determined according to the number of beams of the PEI.

Optionally, the determining the target PO or determining the target PF includes one of the following:

determining the target PO or target PF according to a first parameter; wherein the first parameter includes at least one of a total number of PFs in each discontinuous reception (DRX) cycle, the number of POs included in each PF and UE_ID;
determining the target PO or target PF according to a second parameter; wherein the second parameter is the number of POs corresponding to one PEI;
determining the target PO or target PF according to a period of PEI;
when one PEI is corresponding to one PO, the target PO is a PO that the UE needs to monitor, and the target PF is a PF corresponding to the PO that the UE needs to monitor.

Optionally, the processor is used to read the computer programs in the memory and perform the following operations:

determining the resource location of the PEI according to a resource location of the target SSB, or the target PO or the target PF, and the first offset;
wherein the first offset is an offset between the resource location of the PEI and the resource location of the target SSB, or the target PO or the target PF;
wherein the resource location of the PEI includes at least one of the following:

start location of the PEI;
end location of the PEI;
monitoring start location of the PEI;
monitoring end location of the PEI.

Optionally, the processor is used to read the computer programs in the memory and perform the following operations:
when the resource location of the PEI includes the start location of the PEI and/or the monitoring start location of the PEI, determining the end location or monitoring end location of the PEI based on the start location and/or monitoring start location of the PEI as well as duration of the PEI.
Optionally, the first offset is less than a period length of the target SSB; or,
the first offset is proportional to a period of the target SSB.
Optionally, the processor is used to read the computer programs in the memory and perform the following operations:

determining whether the resource location satisfies a first condition;
if the first condition is not satisfied, updating the resource location to be a difference between the resource location and the period of the SSB.

Optionally, the first condition includes: a distance between the resource location and a resource location of the target PO or target PF is greater than or equal to a first interval.
Optionally, the PEI includes X beams, and the resource location of the PEI include: X resource locations corresponding to the PEI of the X beams;
the processor is used to read the computer programs in the memory and perform the following operations:

when a first resource location of the X resource locations overlaps with a resource location of a first signal, receiving or detecting the PEI at a second resource location;
wherein the second resource location is a first resource location after the first resource location.

Optionally, the processor is used to read the computer programs in the memory and perform the following operations:

determining a first frame number, wherein the first frame number is a frame number of a radio frame where the PEI is located.

Optionally, the processor is used to read the computer programs in the memory and perform the following operations:

determining a first index, wherein the first index is an index of the PEI;
wherein the processor determining the resource location of the paging early indication based on the first frame number, includes:
determining the resource location of the PEI according to the first frame number and the first index.

Optionally, the processor is used to read the computer programs in the memory and perform the following operations:
determining the first frame number according to a third parameter, wherein the third parameter includes at least one of a second interval, a paging frame offset, DRX cycle, a total number of PFs in each DRX cycle, the number of POs included in each PF, the number of POs corresponding to one PEI, and UE_ID.

Optionally, the first frame number is related to a product of a fourth parameter, a fifth parameter and a sixth parameter;

wherein the fourth parameter is related to at least one of the DRX cycle and the total number of PFs in each DRX cycle;
the fifth parameter is related to at least one of UE ID, the total number of PFs in each DRX cycle, and the sixth parameter;
the sixth parameter is related to at least one of the number of POs corresponding to one PEI and the number of POs included in each PF.

Optionally, a result of modulo operation of a sum of the first frame number, the second interval and the paging frame offset, and the DRX cycle, is equal to a product of the fourth parameter, the fifth parameter and the sixth parameter.

Optionally, the processor is used to read the computer programs in the memory and perform the following operations:

determining the first index according to a seventh parameter, wherein the seventh parameter includes at least one of: UE_ID, the total number of PFs in each DRX cycle, and the number of POs included in each PF, and the number of POs corresponding to one PEI;
or,
determining the first index based on an index of PO, the number of POs included in each PF, and the number of POs corresponding to one PEI.

Embodiments of the present disclosure provide a network device, including: a memory, a transceiver, and a processor;

wherein the memory is used to store a computer program; the transceiver is used to transmit and receive data under the control of the processor; the processor is used to read the computer programs in the memory and perform the following operations: determining a resource location of a paging early indication based on at least one of a target Synchronization Signal and PBCH block (SSB), a target paging occasion (PO) and a target paging frame (PF), or based on a first frame number;
the transceiver is used to transmit at the resource location, a PEI to a user equipment (UE);
wherein the PEI is used to indicate an existence situation of paging.

Optionally, the processor is used to read the computer programs in the memory and perform the following operations:
determining at least one of the target SSB, the target PO and the target PF.

Optionally, the processor is used to read the computer programs in the memory and perform the following operations:

determining the target SSB according to a target parameter;
wherein the target parameter includes the target PO or the target PF.

Optionally, the processor is used to read the computer programs in the memory and perform the following operations:

determining the target SSB according to a location of the target parameter and a distance between the target parameter and the target SSB;

wherein the distance satisfies: greater than Y periods of SSBs and less than or equal to (Y+Y1) periods of SSBs, Y is the number of SSBs between the target SSB and the target parameter, $Y1 \geq 1$.

wherein the method further includes determining Y according to at least one of the following:

system message configuration;
broadcast signaling configuration;
agreement;
determined based on a first interval;
determined based on a first offset;
determined according to the number of beams of the SSB;
determined according to the number of beams of the PEI.

Optionally, the determining the target PO or determining the target PF includes one of the following:

determining the target PO or target PF according to a first parameter; wherein the first parameter includes at least one of a total number of PFs in each discontinuous reception (DRX) cycle, the number of POs included in each PF and UE_ID;
determining the target PO or target PF according to a second parameter; wherein the second parameter is the number of POs corresponding to one PEI;
determining the target PO or target PF according to a period of PEI;
when one PEI is corresponding to one PO, the target PO is a corresponding PO when the network device transmits PDCCH scrambled by a paging radio network temporary identifier (P-RNTI) for paging the UE, and the target PF is corresponding PF when the network device transmits PDCCH scrambled by a paging radio network temporary identifier (P-RNTI) for paging the UE.

Optionally, the processor is used to read the computer programs in the memory and perform the following operations:

determining the resource location of the PEI according to a resource location of the target SSB, or the target PO or the target PF, and the first offset;
wherein the first offset is an offset between the resource location of the PEI and the resource location of the target SSB, or the target PO or the target PF;
wherein the resource location of the PEI includes at least one of the following:

start location of the PEI;
end location of the PEI;
monitoring start location of the PEI;
monitoring end location of the PEI.

Optionally, the processor is used to read the computer programs in the memory and perform the following operations:
when the resource location of the PEI includes the start location of the PEI and/or the monitoring start location of the PEI, determining the end location or monitoring end location of the PEI based on the start location and/or monitoring start location of the PEI as well as duration of the PEI.

Optionally, the first offset is less than a period length of the target SSB; or,
the first offset is proportional to a period of the target SSB.

Optionally, the processor is used to read the computer programs in the memory and perform the following operations:

determining whether the resource location satisfies a first condition;
if the first condition is not satisfied, updating the resource location to be a difference between the resource location and the period of the SSB.

Optionally, the first condition includes: a distance between the resource location and a resource location of the target PO or target PF is greater than or equal to a first interval.

Optionally, the PEI includes X beams, and the resource location of the PEI include: X resource locations corresponding to the PEI of the X beams;

the processor is used to read the computer programs in the memory and perform the following operations:

when a first resource location of the X resource locations overlaps with a resource location of a first signal, transmitting the PEI at a second resource location;

wherein the second resource location is a first resource location after the first resource location.

Optionally, the processor is used to read the computer programs in the memory and perform the following operations:

determining a first frame number, wherein the first frame number is a frame number of a radio frame where the PEI is located.

Optionally, the processor is used to read the computer programs in the memory and perform the following operations:

determining a first index, wherein the first index is an index of the PEI;

wherein the determining the resource location of the paging early indication based on the first frame number, includes:

determining the resource location of the PEI according to the first frame number and the first index.

Optionally, the processor is used to read the computer programs in the memory and perform the following operations:

determining the first frame number according to a third parameter, wherein the third parameter includes at least one of a second interval, a paging frame offset, DRX cycle, a total number of PFs in each DRX cycle, the number of POs included in each PF, the number of POs corresponding to one PEI, and UE_ID.

Optionally, the first frame number is related to a product of a fourth parameter, a fifth parameter and a sixth parameter;

wherein the fourth parameter is related to at least one of the DRX cycle and the total number of PFs in each DRX cycle;

the fifth parameter is related to at least one of UE ID, the total number of PFs in each DRX cycle, and the sixth parameter;

the sixth parameter is related to at least one of the number of POs corresponding to one PEI and the number of POs included in each PF.

Optionally, a result of modulo operation of a sum of the first frame number, the second interval and the paging frame offset, and the DRX cycle, is equal to a product of the fourth parameter, the fifth parameter and the sixth parameter.

Optionally, the processor is used to read the computer programs in the memory and perform the following operations:

determining the first index according to a seventh parameter, wherein the seventh parameter includes at least one of: UE_ID, the total number of PFs in each DRX cycle, and the number of POs included in each PF, and the number of POs corresponding to one PEI;

or,

determining the first index based on an index of PO, the number of POs included in each PF, and the number of POs corresponding to one PEI.

Embodiments of the present disclosure provide a paging early indication (PEI) transmission apparatus, including:

a first determining unit configured to determine a resource location of a paging early indication based on at least one of a target Synchronization Signal and PBCH block (SSB), a target paging occasion (PO) and a target paging frame (PF), or based on a first frame number;

a detection unit configured to receive or detect, at the resource location, PEI transmitted by a network device;

wherein the PEI is used to indicate an existence situation of paging.

Embodiments of the present disclosure provide a paging early indication (PEI) transmission apparatus, including:

a second determination unit configured to determine a resource location of the paging early indication based on at least one of a target Synchronization Signal and PBCH block (SSB), a target paging occasion (PO) and a target paging frame (PF), or based on a first frame number;

a transmission unit configured to transmit the PEI to a user equipment at the resource location;

wherein the PEI is used to indicate an existence situation of paging.

Embodiments of the present disclosure provide a processor-readable storage medium, including a computer program stored thereon; wherein the computer program, when executed by a processor, causes the processor to implement the steps of the forgoing paging early indication transmission method.

The beneficial effects of the above technical solutions of the present disclosure are as follows.

In the embodiment of the present application, the UE determines the resource location of the PEI based on one or more of the target SSB, target PO and target PF, or determines the resource location of the PEI based on the first frame number, thereby receiving or detecting, at the resource location, the PEI which is used to indicate an existence situation of paging, thereby reducing the power consumption of the UE.

**BRIEF DESCRIPTION OF THE DRAWINGS**

FIG. 1 is a first schematic flowchart of a paging early indication transmission method according to an embodiment of the present disclosure;

FIG. 2 is a first schematic diagram showing resource locations of PEI according to an embodiment of the present disclosure;

FIG. 3 is a second schematic diagram showing resource locations of PEI according to an embodiment of the present disclosure;

FIG. 4 is a third schematic diagram showing resource locations of PEI according to an embodiment of the present disclosure;

FIG. 5 is a fourth schematic diagram showing resource locations of PEI according to an embodiment of the present disclosure;

FIG. 6 is a fifth schematic diagram showing resource locations of PEI according to an embodiment of the present disclosure;

FIG. 7 is a sixth schematic diagram showing resource locations of PEI according to an embodiment of the present disclosure;

FIG. 8 is a seventh schematic diagram showing resource locations of PEI according to an embodiment of the present disclosure;

FIG. 9a is an eighth schematic diagram showing resource locations of PEI according to an embodiment of the present disclosure;

FIG. 9b is a ninth schematic diagram showing resource locations of PEI according to an embodiment of the present disclosure;

FIG. 10 is a second schematic flowchart of a paging early indication transmission method according to an embodiment of the present disclosure;

FIG. 11 is a first schematic diagram showing a paging early indication transmission device according to an embodiment of the present disclosure;

FIG. 12 is a second schematic diagram showing a paging early indication transmission apparatus according to an embodiment of the present disclosure;

FIG. 13 is a schematic diagram showing a user equipment according to an embodiment of the present disclosure; and

FIG. 14 is a schematic diagram showing a network device according to an embodiment of the present disclosure.

**DETAILED DESCRIPTION**

In order to make the technical problems, the technical solutions and the advantages of the present disclosure more apparent, the present disclosure will be described hereinafter in conjunction with the drawings and embodiments. In the following descriptions, to facilitate understanding embodiments of the present disclosure, specific configurations and specific details of components are provided. Thus, persons having ordinary skill in the art should understand that, various changes and modifications may be made to the embodiments described here, without departing from scope and spirit of the present disclosure. In addition, for clarity and simplicity, descriptions about known functions and constructions are omitted.

It is to be understood that, the phrase "one embodiment" or "an embodiment" as used throughout the specification means that a particular feature, structure, or characteristic relating to an embodiment is included in at least one embodiment of the present disclosure. Thus, "in one embodiment" or "in an embodiment" as used throughout the specification does not necessarily refer to the same embodiment. In addition, these specific features, structures, or characteristics may be combined in any suitable manner in one or more embodiments.

In various embodiments of the present disclosure, it is to be understood that, the sequence numbers of the following processes do not imply the order of execution. The order of execution of each process should be determined by its function and internal logic, which should not constitute any limitation to the implementation processes of the embodiments of the application.

The terms "and/or" in the embodiments of the present disclosure are used to describe association relationship between associated objects, and indicate that there may be three relationships, for example, A and/or B means there are three situations, i.e., there is A alone, there are both of A and B, or, there is B alone. The character "f" generally means that relationship between associated objects before and after the character "/" is "or".

The term "plurality" in the embodiments of the present disclosure means two or more, and other quantifiers are similar.

The technical solutions in the embodiments of the present disclosure will be described hereinafter in a clear and complete manner in conjunction with the accompanying drawings of the embodiments of the present disclosure. Obviously, the following embodiments are merely a part of, rather than all of, the embodiments of the present disclosure, and based on these embodiments, a person skilled in the art may obtain the other embodiments, which also fall within the scope of the present disclosure.

When describing the embodiments of the present disclosure, some concepts used in the following description will first be explained.

Paging message

The paging message includes two parts, namely paging PDCCH and paging Physical Downlink Shared Channel (PDSCH). Based on consideration of saving power for terminals, User Equipment (UE) in an RRC idle (IDLE) state or an RRC inactive state (INACTIVE) needs to follow Discontinuous Reception (DRX) principle for paging reception.

The network side can configure a paging cycle, i.e., a DRX cycle, for the UE through high-level signaling (RRC signaling and/or core network signaling). The system information will also broadcast a default DRX cycle. The UE determines a final DRX cycle used to receive paging based on a minimum value of the DRX cycle configured by higher layer signaling and the default DRX cycle. The UE monitors one PO every DRX cycle.

One PO is composed of a set of PDCCH monitoring occasions (MO), and can include multiple slots, such as subframes or Orthogonal frequency division multiplex (OFDM) symbols. Paging downlink control information (DCI) is transmitted on the PDCCH MO.

A paging frame (PF) is a radio frame which can include one or more POs or start points of PO. In multi-beam operation, the UE assumes that all transmission beams repeatedly transmit the same paging message and short message. Selecting an appropriate beam and receiving paging and short messages is implemented by the UE.

System Frame number (SFN) corresponding to the paging frame can be determined according to the following formula:

$$(SFN+PF\_offset) \bmod T=(T \operatorname{div} N)*(UE\_ID \bmod N)$$

Where T represents the DRX cycle, and its unit is a radio frame; N represents a total number of PFs in each DRX cycle; PF_offset represents an offset used to determine the paging frame; UE_ID=5G-S-TMSI mod 1024, where 5G-S-TMSIis a 48-bit bit string.

Each paging frame includes Ns paging occasions, and an index i_s of each PO is determined according to the following formula:

$$i\_s=floor (UE\_ID/N) \bmod Ns$$

where parameters N, PF_offset, Ns, are signaled by System Information Block (SIB1).

The UE determines a paging PDCCH monitoring occasion based on paging search space, first paging PDCCH monitoring occasion "firstPDCCH-MonitoringOccasionOfPO" configured in "DownlinkConfigCommonSIB" field and the number "nrofPDCCHMonitoringOccasionPerSSB-InPO" of paging PDCCH MOs corresponding to one SSB. When the paging search space is configured with "SearchSpaceId=0", the paging PDCCH monitoring occasion is the same as the remaining minimum system information (RMSI).

When the paging search space is configured with "SearchSpaceId=0", Ns is 1 or 2. For Ns=1, there is only one PO in the PF, and its start point is a start point of the first PDCCH monitoring occasion. For Ns=2, PO is in the first half frame (i_s=0) or the second half frame (i_s =1 ) of PF.

When "SearchSpaceId" configured for the paging search space is not equal to 0, the UE monitors a (i_s+1)-th PO. PO is a set of "S*X" continuous PDCCH monitoring occasions, where S represents the number of actually transmitted SSBs determined based on Synchronization Signal and PBCH block (SSB) location information carried by SIB1; X represents the number of PDCCH MOs corresponding to each SSB configured in "nrofPDCCHMonitoringOccasion-PerSSB-InPO"; if value of X is not configured, X is equal to 1. Further, the [x*S+K]-th paging PDCCH monitoring occasion in PO is corresponding to the K-th transmitted SSB, where x=0, 1, ..., X-1, K=1, 2,...,S. The PDCCH monitoring occasion configured for paging do not overlap with uplink (UL ) symbols, and a first paging MO in the PF is numbered sequentially from 0. When "firstPDCCH-MonitoringOccasionOfPO" is configured, a start point of PDCCH MO in the (i_s+1)-th PO is a (i_s+1)-th value of a high-level parameter "firstPDCCH-MonitoringOccasionOfPO"; otherwise, the start point of the PDCCH MO in the (i_s+1)-th PO is equal to i_s*S*X.

Specifically, embodiments of the present disclosure provide a paging early indication transmission method, apparatus and device, which can determine resource locations of the PEI, thereby realizing transmission of the PEI.

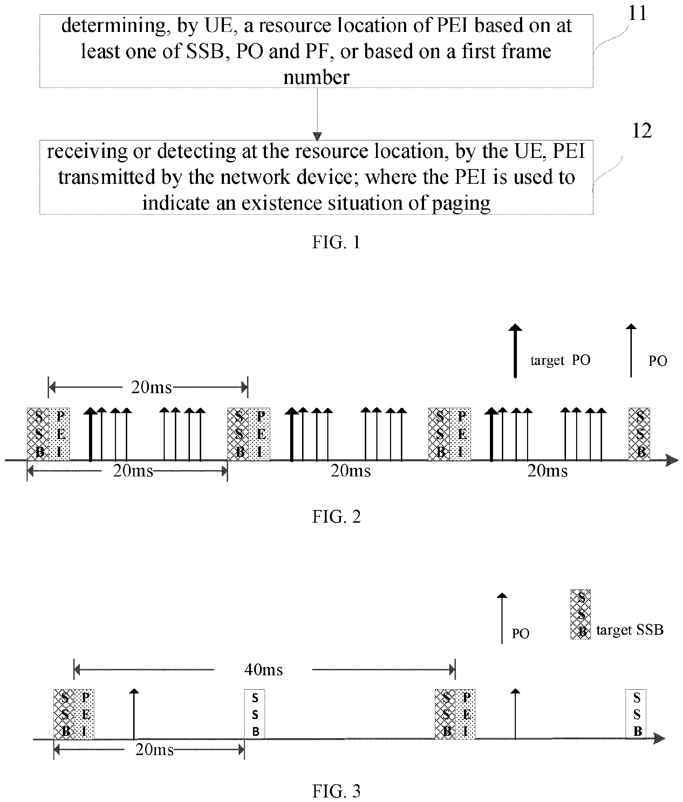

As shown in FIG. 1, one embodiment of the present disclosure provides a paging early indication transmission method, which specifically includes the following steps.

Step 11: determining, by a user equipment (UE), a resource location of the paging early indication (PEI) based on at least one of a target Synchronization Signal and PBCH block (SSB), a target paging occasion (PO) and a target paging frame (PF), or based on a first frame number.

The target SSB is one SSB among multiple SSBs. The target PO is one PO among multiple POs. The target PF is one PF among multiple PFs. When determining the resource location of the PEI, it may be determined based on one of the target SSB, target PO and target PF or a combination of multiple thereof, for example, determining the resource location of the PEI based on the target SSB, determining the resource location of the PEI based on the target PO, determining the resource location of the PEI based on the target PF, determining the resource location of the PEI based on the target SSB and target PO, determining the resource location of the PEI based on the target SSB and target PF, etc., which are not listed here. The determining the resource location of the PEI based on the target SSB and the target PO can include: determining the target SSB based on the target PO, and determining the resource location of the PEI based on the target SSB. The determining the resource location of the PEI based on the target SSB and the target PF can include: determining the target SSB based on the target PF, and determine the resource location of PEI according to the target SSB.

Optionally, the first frame number is a frame number of a radio frame in which the PEI is located. In one embodiment, the UE can determine the resource location of the PEI according to the first frame number. The radio frame corresponding to the first frame number may include one or more PEIs, or start locations of one or more PEIs.

Step 12: receiving or detecting at the resource location, by the UE, PEI transmitted by the network device; where the PEI is used to indicate an existence situation of paging.

After the UE determines the resource location of the PEI, the UE receives or detects the PEI at the resource location. The PEI can be used to indicate the existence situation of paging, i.e., indicating whether there is paging, for example, "1" indicates that there is paging, and "0" indicates that there is no paging. The UE can determine whether the UE needs to receive paging messages based on the PEI. When the UE does not need to receive paging messages, the UE can enter a low power consumption or sleep state, thereby reducing power consumption of the UE.

In the embodiment of the present application, the UE determines the resource location of the PEI based on one or more of the target SSB, target PO and target PF, or determines the resource location of the PEI based on the first frame number, thereby receiving or detecting, at the resource location, the PEI which is used to indicate an existence situation of paging, thereby reducing the power consumption of the UE. Determining the resource location of PEI through SSB can make PEI closer to SSB, and in such case, greater power saving effect can be obtained. The UE in the idle state can receive the PEI immediately after receiving the SSB; when the PEI indicates that the there is no paging for the UE, the UE can enter the low-power sleep state as soon as possible, thereby reducing power consumption. One embodiment of the present application further provides a method for determining a resource location of PEI when one PEI is corresponding to multiple POs or multiple PFs.

Optionally, the method further includes: determining at least one of the target SSB, the target PO and the target PF.

The following describes implementation methods for determining the target SSB, determining the target PO, and determining the target PF, respectively. It is to be noted that when determining more than one of the three above (such as target SSB and target PO), steps are the same as determining each separately.

As an optional embodiment, the determining the target SSB, includes:

determining the target SSB according to a target parameter; where the target parameter includes a target PO or target PF.

In this embodiment, the target SSB can be determined based on the target PO or the target PF, that is, the resource location of the PEI can be determined based on the target PO or the target PF; or, the target SSB can be determined based on the target PO or the target PF, and the resource location of the PEI can be determined based on the target SSB.

Specifically, the determining the target SSB according to the target parameter, may include:

determining the target SSB according to a location of the target parameter and a distance between the target parameter and the target SSB; where the distance satisfies: greater than Y periods of SSBs and less than or equal to (Y+Y1) periods of SSBs, Y is the number of SSBs between the target SSB and the target parameter, Y1 ≥ 1.

In this embodiment, the target SSB may be determined according to the location of the target PO or target PF and the distance between the target PO or target PF and the target SSB. By taking the target PO as an example, the distance satisfies:

$$Y*Period\_SSB<PO\_location-SSB\_location\leq(Y+1)* eriod\_SSB$$

Where Period_SSB represents the period of SSB; POlocation represents a position of the target PO (for example, a frame number, a subframe number, a slot number or an OFDM symbol where a start location of the first MO of the target PO is located); SSB_location represents location of the target SSB (for example, a frame number, a subframe number, a slot number or an OFDM symbol where a start location or an end location of the target SSB is located); PO_location-SSB_location represents a distance. Preferably, Y1=1; when Y1 is greater than 1, the distance is the maximum distance or the minimum distance that satisfies the above conditions. At this point, the target SSB is SSB corresponding to the maximum distance or the minimum distance that satisfies the above conditions. Y is a function related to the number of SSBs between the target SSB and the target parameter.

Optionally, the determination manners of Y may include at least one of the following:

1) System message configuration;
2) Broadcast signaling configuration; for example, SIB-X configuration;
3) Agreement;
4) determined based on a first interval; where the first interval may be the minimum value of the distance between the end location of the PEI and the target PO or target PF, and the first interval may be configured or determined based on other parameters;
5) determine based on a first offset; where the first offset may be an offset between the resource location of the PEI and a resource location of the target SSB, the target PO or the target PF;
6) determined according to the number of beams of the SSB; it is to be noted that the SSB may include the target SSB or non-target SSB, and the number of beams of the target SSB is equal to the number of beams of the non-target SSB;
7) determined according to the number of beams of the PEI.

In this embodiment, after determining the target SSB, the resource location of the PEI can be determined according to the target SSB, so that the UE receives or detects the PEI at the resource location.

As an optional embodiment, the manner of determining the target PO or determining the target PF may include one of the following:

(1) determining the target PO or target PF according to the first parameter; where the first parameter includes at least one of a total number (i.e., N) of PFs in each discontinuous reception (DRX) cycle, the number (i.e., Ns) of POs included in each PF and UE_ID; the UE can determine the target PO or the target PF according to the paging parameters N, Ns and UE_ID;
(2) determining the target PO or target PF according to a second parameter; where the second parameter is the number of POs corresponding to one PEI, the UE can determine the target PO or target PF according to the second parameter which is used to indicate the number of POs corresponding to one PEI;
(3) determining the target PO or target PF according to the period of PEI;
(4) when one PEI is corresponding to one PO, the target PO is PO that the UE needs to monitor, and the target PF is a PF corresponding to the PO that the UE needs to monitor.

In this embodiment, determining the target PO or the target PF may include directly determining the resource location of the PEI based on the target PO or the target PF; or, determining the target SSB based on the target PO or the target PF, and determining the resource location of the PEI based on the target SSB.

Optionally, determining the resource location of the PEI based on at least one of the target SSB, target PO and target PF, includes:

determining the resource location of the PEI according to the resource location of the target SSB, or the target PO or the target PF, and a first offset; where the first offset is an offset between the resource location of the PEI and the resource location of the target SSB, or the target PO or the target PF.

The first offset may be configured by the network side, or may be agreed upon by a protocol, that is, an interval between the PEI and the target SSB, or an interval between the PEI and the target PO, or an interval between the PEI and the target PF, are fixed. By taking the target SSB as an example, the manner of determining the first offset may include:

(1): configured offset between PEI and the target SSB as PEI_location=SSB_location+Offsett; where PEI_location is a frame number, a subframe number, a lot number or OFDM symbol where a start location or an end location of the PEI is located; SSB_location is a frame number, a subframe number, a lot number or OFDM symbol where a start location of the target SSB is located;

It is to be noted that the first offset is less than a period length of the target SSB; or, the first offset is proportional to the period of the target SSB.

(2) a fixed interval between the PEI and the target SSB specified in the protocol. For example, the PEI is located in the next slot of the slot where the target SSB is located.

Specifically, the resource location of the PEI may include at least one of the following:

start location of the PEI;
end location of the PEI;
monitoring start location of the PEI;
monitoring end location of the PEI.

In this embodiment, the start location, end location, monitoring start location and monitoring end location of the PEI can be determined based on one or more of the target SSB, target PO and target PF. The start location or monitoring start location of the PEI can be determined first, and then the end location or monitoring end location of the PEI can be determined based on the start location or monitoring start location.

As an optional embodiment, when the resource location of the PEI includes the start location of the PEI and/or the monitoring start location of the PEI, the end location or monitoring end location of the PEI can be determined based on the start location and/or monitoring start location of the PEI as well as duration of the PEI.

The duration of the PEI may be a fixed time value configured by the network side or specified by the protocol. The end location of PEI can be determined according to the start location and duration of PEI. The monitoring end location of the PEI can be determined based on the monitoring start location of the PEI and the duration of the PEI.

It is to be noted that if the end location or monitoring end location of the PEI is determined first, the start location or monitoring start location of the PEI can also be determined based on the duration.

In the embodiment of the present application, after the resource location of the PEI is determined based on one or more of the target SSB, target PO and target PF, it can further be judged whether the determined resource location satisfies a predetermined condition. When the condition is satisfied, the PEI can be received or detected at the determined resource location. The details are explained below.

As an optional embodiment, the method further includes:

determining whether the resource location satisfies a first condition; if the first condition is not satisfied, updating the resource location to be a difference between the resource location and the period of the SSB.

Optionally, the first condition includes: a distance between the resource location and the resource location of the target PO or target PF is greater than or equal to the first interval.

The first interval is the minimum value of the distance between the resource location of the PEI (preferably the end location or the monitoring end location) and the target PO or target PF. The resource location of the target PO or the target PF may be a position of the first MO of the target PO or a start location of the target PO, or the end location of the target PO.

In this embodiment, when determining whether the resource location satisfies the first condition, the end location or monitoring end location of the resource location may be judged. For example, the end location satisfies the condition: PO_location-PEI_end≥min_gap, where min_gap is the first interval which may be configured by the network side or reported by the UE.

When the resource location of the PEI meets the first condition, the step of receiving or detecting at the resource location, the PEI transmitted by the network device in the step 12 may be performed. When the resource location of the PEI does not meet the first condition, the resource location needs to be updated as a difference between the resource location (that is, the resource location determined in the step 11) and the period of the SSB, that is, resource location updated as PEI_location-Period_SSB. That is, when the network device configures Y through the system message or broadcast signaling or Y is agreed in the protocol, the UE calculates and updates Y according to min_gap, and updates Y to Y+1.

As an optional embodiment, the PEI includes X beams, and the resource location of the PEI include: X resource locations corresponding to the PEI of the X beams.

The receiving or detecting the PEI at the resource location may include: when a first resource location of the X resource locations overlaps with a resource location of a first signal, receiving or detecting the PEI at a second resource location, where the second resource location is a first resource location after the first resource location.

The first resource location is, for example, the K-th resource location in the X resource locations. The first signal may include at least one of SSB, channel state information reference signal (CSI-RS), time-frequency tracking reference signal (TRS), PDCCH, PDSCH, demodulation reference signal (DMRS).

By taking the first signal as an SSB and TRS signal as an example, when the K-th resource location in multiple resource locations completely or partially overlaps with the resource location where signals such as SSB and TRS are located, the K-th resource location is invalid PEI resource location, and the (K+1)-th resource location is used to transmit the PEI of the K-th beam, that is, invalid PEI resource locations can be dropped or skipped, and valid PEI resource locations are postponed.

As an optional embodiment, regarding the manner of determining the resource location of the PEI according to the first frame number, the method further includes:

determining the first frame number, where the first frame number is a frame number of a radio frame where the PEI is located. The UE determines the first frame number, that is, determines the frame number of the radio frame where the PEI is located. The first frame number may be represented by PEI_SFN.

Optionally, the method further includes: determining a first index, where the first index is an index of the PEI.

The determining the resource location of the PEI based on the first frame number, may include: determining the resource location of the PEI based on the first frame number and the first index.

In this embodiment, the first index is an index of a PEI, which may be an index of the PEI in at least one PEI included in the radio frame where the PEI is located. The first index can be represented by PEI_i_s. For example, when a radio frame corresponding to a first frame number includes one PEI, then PEI_i_s=0; when the radio frame corresponding to the first frame number includes 2 PEIs, then PEI_i_s=0 or 1.

In the embodiment of the present application, the determining, by the UE, the resource location of the PEI based on the first frame number, may include: determining the resource location of the PEI only based on the first frame number; or, determining the resource location of the PEI based on the first frame number and the first index. For example, when the radio frame corresponding to the first frame number includes only one PEI, the resource location of the PEI can be determined only based on the first frame number; when the radio frame corresponding to the first frame number includes multiple PEIs, the resource location of the PEI can be determined based on the first frame number and the first index.

Optionally, the determining the first frame number, includes: determining the first frame number according to a third parameter, where the third parameter includes at least one of a second interval (PEI_offset), a paging frame offset (PF_offset), DRX cycle (T), a total number (N) of PFs in each DRX cycle, the number (Ns) of POs included in each PF, the number (X) of POs corresponding to one PEI, and UE_ID.

The second interval is an interval used to determine the first frame number, and the second interval can be used to describe the number of radio frames between the first frame number and the frame number (i.e., PF) where the PO is located. The paging frame offset is used to determine the offset of the PF. The first frame number may be determined according to one or more of the third parameters.

Optionally, the first frame number is related to a product of a fourth parameter, a fifth parameter and a sixth parameter. The fourth parameter is related to at least one of the DRX cycle and the total number of PFs in each DRX cycle. Optionally, if the fourth parameter is related to the DRX cycle (T) and the total number (N) of PFs in each DRX cycle, then the fourth parameter satisfies (T div N).

The fifth parameter is related to at least one of UE ID, the total number of PFs in each DRX cycle, and the sixth parameter.

The sixth parameter is related to at least one of the number of POs corresponding to one PEI and the number of POs included in each PF.

Optionally, if the sixth parameter is related to the number (X) of POs corresponding to one PEI and the number (Ns) of POs included in each PF, then the sixth parameter (A) can satisfy: $A=\max(X/Ns,1)$, i.e., taking the maximum value of X/Ns and 1; or, the sixth parameter (A) can satisfy: $A=\max(floor(X/Ns), 1)$, i.e., taking the maximum value of floor(X/Ns) and 1, where floor means rounding down.

If the fifth parameter is related to UE_ID, the total number (N) of PFs in each DRX cycle and the sixth parameter (A), then the fifth parameter can satisfy: $floor((UE\_ID \bmod N)/A)$.

Specifically, a result of modulo operation of a sum of the first frame number, the second interval and the paging frame offset, and the DRX cycle, is equal to a product of the fourth parameter, the fifth parameter and the sixth parameter.

Assuming that the fourth parameter satisfies (T div N), the fifth parameter satisfies $floor((UE\_ID \bmod N)/A)$, and the sixth parameter satisfies $A=\max(X/Ns, 1)$ or $A=\max(floor(X/Ns), 1)$ as an example, then the first frame number

satisfies the following formula:

$$(PEI\_SFN+PF\_offset+PEI\_offset)\bmod T=(T\ div\ N)*floor((UE\_ID\ mod\ N)/A)*A$$

where PEI_SFN is the frame number (that is, the first frame number) of the radio frame where PEI is located; PF_offset is the offset used to determine PF; PEI_offset is the offset used to determine PEI_SFN; T is the DRX cycle; N is the total number of PFs in each DRX cycle; Ns is the number of POs included in each PF; X is the number of POs corresponding to one PEI; UE_ID is 5G-S-TMSI mod 1024.

It is to be noted that, PF_offset, T, N and Ns can be paging parameters configured by the network. PEI_SFN may be configured by the network device or agreed in a protocol, which is not limited in this embodiment. PEI_offset is used to describe radio frames between the frame number (PEI_SFN) where the PEI is located and the frame number (PF) where the PO is located, and its unit is a radio frame. X may be configured by the network device or agreed in the protocol, which is not limited in this embodiment.

As an optional embodiment, the determining the first index, may include:

manner (a): determining the first index according to a seventh parameter; where the seventh parameter includes at least one of UE_ID, the total number (N) of PFs in each DRX cycle, and the number (Ns) of POs included in each PF, and the number (X) of POs corresponding to one PEI;
or,
manner (b): determining the first index based on an index (i_s) of PO, the number (Ns) of POs included in each PF, and the number (X) of POs corresponding to one PEI. The index of the PO may be an index of the PO received or detected by the UE.

In this embodiment, the UE determines the first index, which is an index of the PEI in the first frame number, or an index of PEI in at least one PEI included in the radio frame where the PEI is located. The first index can be represented with PEI_i_s. For the above manner (a), if the seventh parameter includes: UE_ID, the total number (N) of PFs in each DRX cycle, the number (Ns) of POs included in each PF, and the number (X) of POs corresponding to one PEI, then the first index can satisfy:

$$PEI\_i\_s=(floor(UE\_ID/N)\ mod\ Ns)\ mod\ B$$

Where PEI_i_s is the first index, which can also be expressed as an index of PEI in one or more PEIs included in the radio frame corresponding to the first frame number; N is the total number of PFs in each DRX cycle; Ns is the number of POs included in each PF; X is the number of POs corresponding to one PEI; B=max(Ns/X,1) or B=max(floor(Ns/X), 1); UE_ID is 5G-S-TMSI mod 1024.

T, N, and Ns can be paging parameters configured by the network device. X may be configured by the network device or agreed in a protocol, which is not limited in this embodiment.

For the manner (b), that is, the first index can be determined based on the index (i_s) of PO, the number (Ns) of POs included in each PF, and the number (X) of POs corresponding to one PEI, then the first index can satisfy:

$$PEI\_i\_s=i\_s\ mod\ B$$

Where PEI_i_s is the first index, i_s is i_s corresponding to the PO determined by the UE; X is the number of POs corresponding to one PEI; Ns is the number of POs included in each PF; B=max(Ns/X, 1) or B=max(floor(Ns/X), 1).

In this embodiment, when the UE determines the resource location of the PEI, the UE may determine the resource location of the PEI based on the first frame number. The UE may determine the resource location of the PEI only based on the first frame number, or based on the first frame number and the first index, which is simple for the UE and has less impact on the protocol.

It is to be noted that the network device may also determine the resource location of the PEI based on at least one of the target SSB, target PO and target PF, or based on the first frame number, so as to transmit the PEI at the determined resource location, so that the UE can receive or detect PEI at the determined resource location. The method for the UE to determine the resource location of the PEI is also applicable to the network device and will not be repeated here.

The following describes process of the paging early indication transmission method of the present application through specific embodiments.

Embodiment 1 is described by taking an example in which the resource location of the paging early indication (PEI) is determined through the target SSB and the target SSB is determined through the target PO. In this embodiment, the start location or end location of the PEI is determined according to the target SSB.

Step 1: determining a target PO and determining a target SSB based on the target PO.

The following description is based on two solutions: solution one is a PO-dense scenario; solution two is a PO-sparse scenario.

Solution 1: Ns=4, N=T (PO-dense scenario).

(1) when determining a target PO, the UE determines a target PO from multiple POs of the network device in the following manners.

Manner 1: the UE determines the target PO based on paging parameters N and Ns;

where N represents the number of paging frames in one DRX cycle, and Ns represents the number of POs in one paging frame. Therefore, when values of N and Ns are relatively large, it indicates that POs are dense in the DRX cycle.

One possible implementation manner is that the target PO is one PO of X POs, and the value of X is related to the paging parameters N and Ns. For example, when the values of Ns and N are relatively large, the value of X is large; and when the values of N and Ns are relatively small, the value of X is small.

The UE determines a parameter 0 corresponding to each PO of the network device, such as parameter 0=PO_Index mod X, where PO_Index=SFN_PF*N*Ns/T+i_s, PO_Index represents an index of the PO in the DRX cycle. The parameter 0 may be an index of the PO in the X POs.

Optionally, PO_Index can also be expressed as:

$$PO\_Index = floor(SFN\_PF*N*Ns/T) + i\_s$$

That is, the parameter 0 is expressed as: parameter 0=(floor(SFN_PF*N*Ns/T)+i_s)mod X.

where SFN_PF is an SFN where the PF corresponding to the PO is located; N is the number of PFs in one DRX cycle; Ns is the number of POs in one PF; T is duration of the DRX cycle; and i_s is an index of the PO in the corresponding PF.

It can be agreed that when the value of the parameter 0 is 0, the corresponding PO is the target PO.

It is to be noted that this embodiment is not limited to that the PO corresponding to the parameter 0 with a value of 0 is the target PO. The protocol can predefine that the PO corresponding to the target parameter with a value of any one of 0, ..., X-1, is the target PO. Through predefinition, the network device and the UE will not have ambiguity about the parameter 0 corresponding to the target PO. The system message broadcast can also be used to notify that the PO corresponding to the parameter 0 with a value of any one of 0, ..., X-1, is the target PO, which is not limited thereto.

Manner 2: the UE determines the target PO based on a parameter X of X POs corresponding to one PEI broadcast by the network device.

The difference between this manner 2 and the above manner 1 is that the value of X is notified by the network device through system messages or other broadcast signaling, and the network device and the UE determine the target PO through the parameter X of X POs corresponding to one PEI which is broadcast.

Manner 3: the UE determines the target PO according to a period of the PEI.

The network device configures a period of the PEI through system messages or other broadcast signaling. For example, the protocol specifies that the target PO is a first PO corresponding to a first PF in each period of the PEI.

As shown in FIG. 2, the target PO is one PO among every 8 POs of the network device. Therefore, in this embodiment, the value of X is 8; the period of SSB in FIG. 2 is 20ms. The manner for determining X can be any one of the above three manners.

Optionally, the target PF may also be determined; and in this embodiment, the target PO is preferably determined. For determining the target PF, for example, the UE determines the target PF according to at least one of the paging parameter N and UE_ID; the UE determines the target PF according to the parameter X, where the parameter X is used to indicate that one PEI corresponds to X POs. It is to be noted that the UE can determine the target PF according to the period of the PEI. The following describes the manner for determining the target PF through specific embodiments.

Manner 4: the UE determines the target PF according to the paging parameter N.

One possible implementation manner is that the target PF is one PF in X1 PFs, and the value of X1 is related to the paging parameter N. For example, when the value of N is relatively large, the value of X1 is large; and when the value of N is relatively small, the value of X1 is small.

The UE determines a parameter 1 corresponding to each PF of the network device, such as parameter 1=PF_Index mod X1, where PF_Index=SFN_PF_1*N/T, PF_Index represents an index of the PF in the DRX cycle. The parameter 1 may be an index of the PF in X1 PFs.

Optionally, PFIndex can also be expressed as:

$$PF\_Index=floor(SFN\_PF\_1*N/T)$$

That is, the parameter 1 is expressed as: parameter 1=(floor(SFN_PF_1*N/T))mod X1.

SFN_PF_1 represents the SFN where the PF is located; N is the number of PFs in one DRX cycle; T is the duration of the DRX cycle.

It can be agreed that when a value of the parameter 1 is 0, the corresponding PF is the target PF.

It should be noted that this embodiment is not limited to the PF corresponding to the parameter 1 with a value of 0 as the target PF. The protocol can predefine that the PF corresponding to the parameter 1 with a value of any one of 0, ..., X-1 is the target PF. Through predefinition, the network device and the UE will not have ambiguity about the parameter 1 corresponding to the target PF. The system message broadcast can also be used to notify that the PF corresponding to the parameter 1 with a value of any one of 0, ..., X-1, is the target PF, which is not limited thereto.

Manner 5: the UE determines the target PF based on a parameter X of X POs corresponding to one PEI broadcast by the network device.

The difference between this manner 5 and the above manner 4 is that in the manner 5, a value of X1 related to the value of X, and the value of X is notified by the network device through system messages or other broadcast signaling, and the network device and the UE determine X1 through the parameter X of X POs corresponding to one PEI which is broadcast, for example, X1=X/Ns. The target PF is determined through X1 and the manner 4.

Manner 6: the UE determines the target PF according to a period of the PEI.

The network device configures a period of the PEI through system messages or other broadcast signaling. For example, the protocol specifies that the target PF is a first PF in each period of the PEI. The above manners 1-3 are optional implementation manners for determining the target PO, and the above manners 4-6 are optional implementation manners for determining the target PF.

The UE may determine the target SSB based on the target PO/target PF. In this embodiment, determining the target SSB based on the target PO is taken as an example. The MIB message in the SSB carries frame number information. After synchronization, the UE can determine the frame number, slot, etc., where each SSB is located.

A distance between the target SSB and the target PO needs to be greater than Y periods of SSB and less than or equal to (Y+Y1) periods of SSB. Specifically, the number of frames between the target SSB and the target PO needs to be greater than the number of frames corresponding to Y periods of SSB and less than or equal to the number of frames corresponding to (Y+Y1) periods of SSB; or, the number of subframes between the target SSB and the target PO needs to be greater than the number of subframes corresponding to the Y periods of SSB and less than or equal to the number of subframes corresponding to (Y+Y1) periods of SSB; or, the number of slots between the target SSB and the target PO needs to be greater than the number of slots corresponding to the Y periods of SSB and less than or equal to the number of slots corresponding to (Y+Y1) periods of SSB; or, the number of OFDM symbols between the target SSB and the target PO needs to be greater than the number of OFDM symbols corresponding to the Y periods of SSB and less than or equal to the number of OFDM symbols corresponding to (Y+Y1) periods of SSB. That is, the target SSB satisfies:

$$Y*Period\_SSB<PO\_location-SSB\_location\leq(Y+1)*Period\_SSB$$

where PO_location is the location of the target PO (for example, the frame number, subframe number, slot number or OFDM symbol where a start location of a first MO of the target PO is located); SSB_location is the location of the target SSB (for example, the frame number, subframe number, slot number or OFDM symbol where a start location or end location of the target SSB is located). PO_location- SB_location represents the distance between target SSB and target PO. In this example, Y1=1.

The following takes an example that the number of frames between the target SSB and the target PO needs to be greater than the number of frames corresponding to the Y periods of SSB and less than or equal to the number of frames corresponding to the (Y+1) period of SSBs. The frame number (SFN_SSB) where the target SSB is located needs to satisfy:

$$Y*Period\_SSB<SFN\_PO-SFN\_SSB\leq(Y+1)*Period\_SSB$$

where SFN_PO is the SFN where the PF corresponding to the target PO is located; and SFN_SSB is the SFN where the target SSB is located.

Through the above formula, the SSB that satisfies the formula can be obtained as the target SSB. Y in this formula can be determined as follows:

1) System message or broadcast signaling SIB-X configures Y, where Y is the number of SSBs between the target SSB and the target PO;
2) the agreement stipulates Y
3) Y is calculated based on min_gap and/or offset and/or the number of beams of SSB and/or the number of beams of PEI.

Solution 2: Ns=1, N=T/4 (PO-sparse scenario).

The differences between the solution 2 and the solution 1 are the determination manners of the target PO.

When determine the target PO, the UE determines that PO monitored by the UE itself is the target PO.

The frame number (SFN_PO) of PF corresponding to the PO monitored by the UE itself is determined by PF, "first PDCCH-MonitoringOccasionOfPO" and subcarrier spacing. When the subcarrier spacing (SCS) is 15kHz, the frame number where the PF corresponding to the PO is located, is:

$$PF+floor(firstPDCCH\text{-}MonitoringOccasionOfPO/140).$$

As shown in FIG. 3, for the target PO, the UE determines that PO monitored by the UE itself is the target PO. The UE can also determine that the PF where the PO monitored by the UE itself is located, is the target PF. In FIG. 3, the period of SSB is 20ms. In this embodiment, determining the target PO is taken as an example.

The UE may determine the target SSB based on the target PO/target PF. In this embodiment, determining the target SSB based on the target PO is taken as an example. This part of the solution is the same as the solution 1 and will not be repeated here.

The above step 1 is to determine the target SSB. The following describes determining the resource location of the PEI based on the target SSB.

Step 2: the UE determines the resource location of the PEI based on the target SSB.

Optionally, the start location or end location of the PEI can be determined based on the location of the target SSB.

An offset of PEI (that is, a start location or end location of PEI) and the target SSB can be configured. The start location or end location of the PEI is determined by the position of the target SSB and the offset, for example, the following formula is satisfied: PEI_location=SSB_location+Offset, where PEIlocation is the frame number, subframe number, slot number or OFDM symbol where the start location or end location of the PEI is located; SSB_location is the frame number, subframe number, slot number or OFDM symbol where the start location of the target SSB is located.

Preferably, a length of the offset is less than a length of the period of the SSB, and the offset is greater than or equal to 0. At this point, the PEI is behind the SSB, as shown in FIG. 2 and FIG. 3. The length of the offset is smaller than the length of period of the SSB to ensure:

$$Y*Period\_SSB<SFN\_PO-SFN\_PEI\leq(Y+1)*Period\_SSB$$

Optionally, the offset can also be a negative number, that is, the PEI is in front of the SSB.

Value of the offset can also be related to the period of SSB. When the period of SSB is larger, the possible values of the offset are more or larger. When the period of SSB is smaller, the possible values of the offset are fewer or smaller. That is, the possible candidate values of the offset are proportional to the period of SSB.

The interval offset between PEI (that is, the start location or end location of PEI) and the target SSB can also be fixed, that is, the interval offset can be agreed upon by the protocol. For example, the PEI is located in a first slot of a frame next to a frame where the target SSB is located, or the PEI is located in a slot next to a slot where the target SSB is located.

Optionally, a duration of PEI can be configured or fixed, and the end location (or start location) of PEI is determined based on the start location (or end location) of PEI and the duration of PEI.

A distance between the end position of PEI and PO needs to be greater than or equal to min_gap, for example, the following conditions need to be satisfied: PO_location-PEI_end≥min_gap. The min_gap can be configured by the network side or reported by the UE. Or, the distance between the start location of PEI and PO needs to be greater than or equal to min_gap.

If the start location of PEI or the end location of PEI does not satisfy the above conditions, the start location or end location of PEI can be updated to be PEI_location-Period_SSB. That is, when the network device configures Y through the system messages or broadcast signaling or Y is agreed in the protocol, the UE calculates whether the start location or end location of the PEI satisfies the conditions based on min_gap to determine whether to update Y When Y needs to be updated, Y is updated to Y+1. A resource location of the updated PEI satisfies:

$$(Y+1)*Period\_SSB < SFN\_PO - SFN\_PEI \le (Y+2)*Period\_SSB$$

Step 3: the UE receives or detects the PEI at the resource location.

In NR, many signals are transmitted via different beams. PEI is likely to be the same as paging DCI, and PEI also has multiple PEI occasions. The K-th PEI occasion is corresponding to the K-th SSB. At this point, the beam for transmitting PEI on the K-th PEI occasion is corresponding to the beam for SSB at the K-th SSB location. That is, the number of PEI occasions is the same as the number of actually transmitted SSBs carried by SIB 1. When the PEI is a multi-beam PEI, the solution for determining the resource location of the PEI in the embodiment 1 includes determining multiple resource locations corresponding to the multi-beam PEI. For example, the start location of the above PEI is a start location of PEI of the first beam. The end location of the PEI is an end location of the PEI of the last beam. The duration of the PEI includes the resource locations corresponding to PEIs of multiple beams. The specific method of how to determine resource locations corresponding to PEIs of multiple beams in the duration of the PEI is not limited in this embodiment of the application. It is assumed that the first PEI resource location in the duration of the PEI starts to be numbered, and the duration of the PEI includes multiple PEI resource locations. When the K-th resource location among the multiple PEI resource locations completely or partially overlaps with the resource location where signals such as SSB and TRS are located, the K-th resource location is an invalid PEI resource location, and the (K+1)-th PEI resource location is used to transmit the PEI of the K-th beam. That is, the invalid PEI resource location is dropped or skipped. At this point, the PEI originally transmitted at the invalid PEI resource location is postponed to the next valid PEI resource location for transmission.

In the step 3, the network device transmits a PEI signal at the resource location, and the corresponding behavior of the step 3 at the UE side is that the UE receives the TRS/PEI signal at the resource location. It is to be noted that whether the network device will definitely transmit the PEI signal at a transmission location depends on the specific function of the PEI signal. For example, if the PEI is used to indicate that there is paging DCI at the PO, the network device transmits the PEI at the resource location only if there is paging DCI at the PO. At this point, the UE receives or detects the PEI at the determined resource location of PEI, and finally the UE receives the PEI. When there is no paging DCI at the PO, the network device will not transmit PEI at the determined resource location. At this point, the UE receives or detects the PEI at the determined resource location of the PEI, and finally the UE cannot receive the PEI.

It is to be noted that the PEI described in the present disclosure may be DCI-based PEI, or sequence-based PEI. The sequence-based PEI may be TRS-based PEI, or CSI-RS-based PEI, or secondary synchronization signal (SSS)-based PEI (SSS-based PEI). The embodiments of the present application do not specify the specific form, specific type, or specific format of PEI.

In the embodiment of the present application, the PEI can be used to indicate at least one of the following:

whether there is paging DCI at the PO;
whether to monitor paging DCI at the PO;
whether to monitor paging messages at the PO;
whether it is necessary to wake up to monitor paging messages during this paging cycle;
there is paging message at the PO;
monitoring paging DCI at the PO;
monitoring paging messages;
it is necessary to wake up to monitor paging messages during this paging cycle;
availability of TRS;
whether Earthquake and Tsunami Warning System (ETWS) transmit notification information;
whether to transmit system message update indication;
indication information of beam of tracking reference signal.

Steps for the network device to implement the paging early indication transmission method are corresponding to those of the UE and will not be repeated here.

Embodiment 2 is described by taking an example in which: the resource location of the PEI is determined through the target SSB and determine the target SSB through the target PO. In this embodiment, a monitoring start location of the PEI is determined according to the target SSB.

Step 1: determining a target PO and determining a target SSB based on the target PO.

The step 1 of the embodiment 2 is implemented in the same manner as the step 1 of the embodiment 1, and will not be repeated here.

Step 2: the UE determines the resource location of the PEI based on the target SSB.

Optionally, the monitoring start location of the PEI can be determined based on the location of the target SSB.

An offset of the monitoring start location of the PEI and the target SSB can be configured. The monitoring start location of the PEI is determined by the location of the target SSB and the offset, for example, the following formula is satisfied: PEI_location=SSB_location+Offset, where PEI_location is the frame number, slot number or OFDM symbol where the monitoring start location of the PEI is located; SSB location is the frame number, slot number or OFDM symbol where the start location of the target SSB is located.

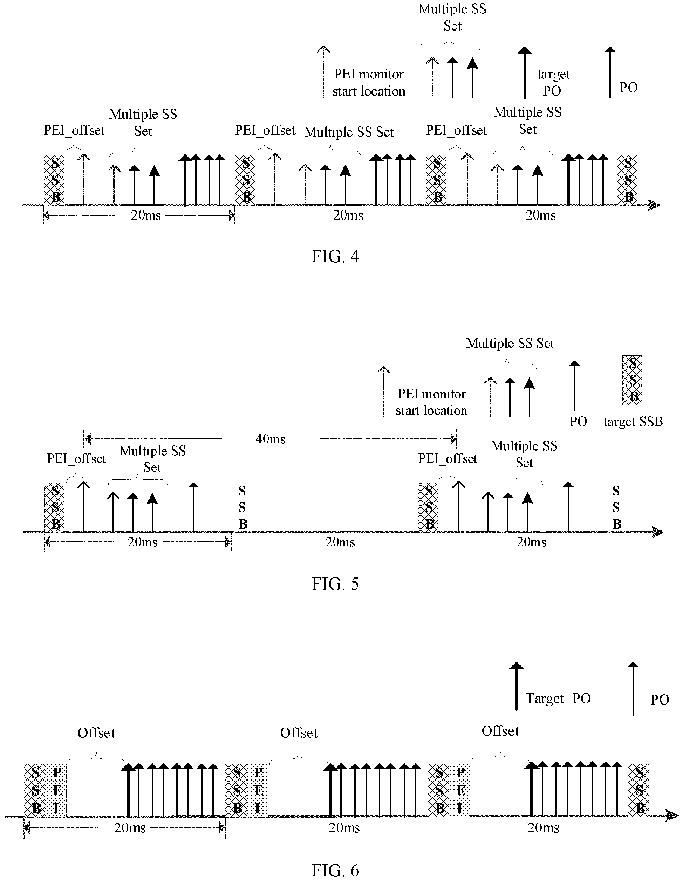

Preferably, a length of the offset is less than a length of the period of the SSB, and the offset is greater than or equal to 0. At this point, the PEI is behind the SSB, as shown in FIG. 4 and FIG. 5. FIG. 4 shows a PO-dense scenario, Ns=4, N=T, and the period of SSB is 20ms. FIG. 5 shows a PO-sparse scenario, Ns=1, N=T/4, and the period of SSB is 20ms. The length of the offset is smaller than the length of period of the SSB to ensure:

$$Y*Period\_SSB<SFN\_PO-SFN\_PEI\leq(Y+1)*Period\_SSB$$

Optionally, the offset can also be a negative number, that is, the monitoring start location of the PEI is in front of the SSB.

Value of the offset can also be related to the period of SSB. When the period of SSB is larger, the possible values of the offset are more or larger. When the period of SSB is smaller, the possible values of the offset are fewer or smaller. That is, the possible candidate values of the offset are proportional to the period of SSB.

The interval offset between the monitoring start location of the PEI and the target SSB can also be fixed, that is, the interval offset can be agreed upon by the protocol. For example, the monitoring start location of the PEI is located in a first slot of a frame next to a frame where the target SSB is located, or the PEI is located in a slot next to a slot where the target SSB is located.

Optionally, a search space (SS) set of the PEI can be configured, such as multiple SS Set shown in FIG. 4 and FIG. 5. The UE starts from the monitoring start location of the PEI to prepare for monitoring the PEI. The specific start location of PEI monitoring is indicated by "monitoringSlotPeriodicityAndOffset" of the search space set.

Specifically, a monitoring end location of the PEI can be determined by the monitoring start location of the PEI (PEI location) and duration, for example, PEI_end=PEI_location+duration. At this point, the duration is duration of multiple search spaces under multiple beams.

A distance between the monitoring end position of PEI (PEI_end) and PO needs to be greater than or equal to min_gap, for example, the following conditions need to be satisfied: PO_location-(PEI_location+duration)≥min_gap. The min_gap can be configured by the network side or reported by the UE.

If the monitoring end position of PEI does not satisfy this condition, the monitoring start location of PEI can be updated to be PEI_location-Period_SSB. That is, when the network device configures Y through the system messages or broadcast signaling or Y is agreed in the protocol, the UE calculates whether the monitoring start location of the PEI satisfies the conditions based on min_gap to determine whether to update Y When Y needs to be updated, Y is updated to Y+1. A new monitoring start location of the PEI satisfies:

$$(Y+1)*Period\_SSB<SFN\_PO-SFN\_PEI\leq(Y+2)*Period\_SSB$$

Step 3: the UE receives or detects the PEI at the resource location.

In NR, many signals are transmitted via different beams. PEI is likely to be the same as paging DCI, and PEI also has multiple PEI occasions. The K-th PEI occasion is corresponding to the K-th SSB. At this point, the beam for transmitting PEI on the K-th PEI occasion is corresponding to the beam for SSB at the K-th SSB location. That is, the number of PEI occasions is the same as the number of actually transmitted SSBs carried by SIB1. When the PEI is a multi-beam PEI, the solution for determining the resource location of the PEI in the embodiment 2 includes determining multiple resource locations corresponding to the multi-beam PEI. For example, the monitoring start location of the PEI is a monitoring start location of PEI of the first beam. The duration of the PEI includes the resource locations corresponding to PEIs of multiple beams. The specific method of how to determine resource locations corresponding to PEIs of multiple beams in the duration of the PEI is not limited in this embodiment of the application. It is assumed that the first PEI resource location in the duration of the PEI starts to be numbered, and the duration of the PEI includes multiple PEI resource locations. When the K-th resource location among the multiple PEI resource locations completely or partially overlaps with the resource location where signals such as SSB and TRS are located, the K-th resource location is an invalid PEI resource location, and the (K+1)-th PEI resource location is used to transmit the PEI of the K-th beam. That is, the invalid PEI resource location is dropped or skipped. At this point, the PEI originally transmitted at the invalid PEI resource location is postponed to the next valid PEI resource location for transmission.

Steps for the network device to implement the paging early indication transmission method are corresponding to those of the UE and will not be repeated here.

Embodiment 3 is described by taking an example in which the resource location of PEI is determined through the target PO. In this embodiment, a start location or end location of the PEI is determined according to the target PO.

Step 1: determining the target PO.

The following description is based on two solutions: solution one is a PO-dense scenario; solution two is a PO-sparse scenario.

Solution 1: Ns=4, N=T (PO-dense scenario), as shown in FIG. 6.

When determining a target PO, the UE determines a target PO from multiple POs of the network device in the following manners.

Manner 1: the UE determines the target PO based on paging parameters N and Ns;

where N represents the number of paging frames in one DRX cycle, and Ns represents the number of POs in one paging frame. Therefore, when values of N and Ns are relatively large, it indicates that POs are dense in the DRX cycle.

One possible implementation manner is that the target PO is one PO of X POs, and the value of X is related to the paging parameters N and Ns. For example, when the values of Ns and N are relatively large, the value of X is large; and when the values of Ns and N are relatively small, the value of X is small.

The UE determines a parameter 0 corresponding to each PO of the network device, such as parameter 0=PO_Index mod X, where PO_Index=SFN_PF*N*Ns/T+i_s, PO_Index represents an index of the PO in the DRX cycle. The parameter 0 may be an index of the PO in the X POs.

Optionally, PO_Index can also be expressed as:

$$PO\_Index = floor(SFN\_PF*N*Ns/T) + i\_s$$

That is, the parameter 0 is expressed as: parameter 0=(floor(SFN_PF*N*Ns/T)+i_s)mod X,

where SFN_PF is an SFN where the PF corresponding to the PO is located; N is the number of PFs in one DRX cycle; Ns is the number of POs in one PF; T is duration of the DRX cycle; and i_s is an index of the PO in the corresponding PF.

It can be agreed that when the value of the parameter 0 is 0, the corresponding PO is the target PO.

It is to be noted that this embodiment is not limited to that the PO corresponding to the parameter 0 with a value of 0 is the target PO. The protocol can predefine that the PO corresponding to the target parameter with a value of any one of 0, ..., X-1, is the target PO. Through predefinition, the network device and the UE will not have ambiguity about the parameter 0 corresponding to the target PO. The system message broadcast can also be used to notify that the PO corresponding to the parameter 0 with a value of any one of 0, ..., X-1, is the target PO, which is not limited thereto.

Manner 2: the UE determines the target PO based on a parameter X of X POs corresponding to one PEI broadcast by the network device.

The difference between this manner 2 and the above manner 1 is that the value of X is notified by the network device through system messages or other broadcast signaling, and the network device and the UE determine the target PO through the parameter X of X POs corresponding to one PEI which is broadcast.

Manner 3: the UE determines the target PO according to a period of the PEI.

The network device configures a period of the PEI through system messages or other broadcast signaling. For example, the protocol specifies that the target PO is a first PO corresponding to a first PF in each period of the PEI.

Optionally, the target PF may also be determined; and in this embodiment, the target PO is preferably determined. For determining the target PF, for example, the UE determines the target PF according to at least one of the paging parameter N and UE_ID; the UE determines the target PF according to the parameter X, where the parameter X is used to indicate that one PEI corresponds to X POs. The UE can also determine the target PF according to the period of the PEI. The following describes the manner for determining the target PF through specific embodiments.

Manner 4: the UE determines the target PF according to the paging parameter N.

One possible implementation manner is that the target PF is one PF in X1 PFs, and the value of X1 is related to the paging parameter N. For example, when the value of N is relatively large, the value of X1 is large; and when the value of N is relatively small, the value of X1 is small.

The UE determines a parameter 1 corresponding to each PF of the network device, such as parameter 1=PF_Index mod X1, where PF_Index=SFN_PF_1*N/T, PF_Index represents an index of the PF in the DRX cycle. The parameter 1 may be an index of the PF in X1 PFs.

Optionally, PF_Index can also be expressed as:

$$PF\_Index = floor(SFN\_PF\_1*N/T)$$

That is, the parameter 1 is expressed as: parameter $1=(\text{floor}(SFN\_PF\_1*N/T))\bmod X1$.

SFN_PF_1 represents the SFN where the PF is located; N is the number of PFs in one DRX cycle; T is the duration of the DRX cycle.

It can be agreed that when a value of the parameter 1 is 0, the corresponding PF is the target PF.

It is to be noted that this embodiment is not limited to the PF corresponding to the parameter 1 with a value of 0 as the target PF. The protocol can predefine that the PF corresponding to the parameter 1 with a value of any one of 0, ..., X-1 is the target PF. Through predefinition, the network device and the UE will not have ambiguity about the parameter 1 corresponding to the target PF. The system message broadcast can also be used to notify that the PF corresponding to the parameter 1 with a value of any one of 0, ..., X-1, is the target PF, which is not limited thereto.

Manner 5: the UE determines the target PF based on a parameter X of X POs corresponding to one PEI broadcast by the network device.

The difference between this manner 5 and the above manner 4 is that in the manner 5, a value of X1 related to the value of X, and the value of X is notified by the network device through system messages or other broadcast signaling, and the network device and the UE determine X1 through the parameter X of X POs corresponding to one PEI which is broadcast, for example, X1=X/Ns. The target PF is determined through X1 and the manner 4.

Manner 6: the UE determines the target PF according to a period of the PEI.

The network device configures a period of the PEI through system messages or other broadcast signaling. For example, the protocol specifies that the target PF is a first PF in each period of the PEI.

The above manners 1-3 are optional implementation manners for determining the target PO, and the above manners 4-6 are optional implementation manners for determining the target PF.

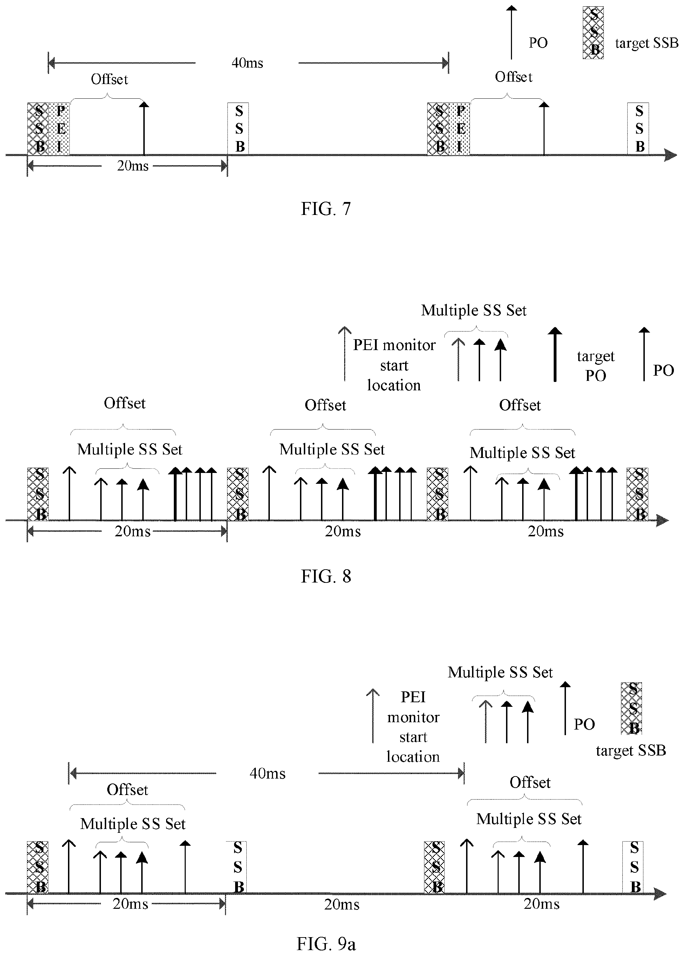

Solution 2: Ns=1, N=T/4 (PO-sparse scenario), as shown in FIG. 7.

The differences between the solution 2 and the solution 1 are the determination manners of the target PO.

When determine the target PO, the UE determines that PO monitored by the UE itself is the target PO.

The frame number (SFN_PO) of PF corresponding to the PO monitored by the UE itself is determined by PF, "first PDCCH-MonitoringOccasionOfPO" and subcarrier spacing. When the subcarrier spacing (SCS) is 15kHz, the frame number where the PF corresponding to the PO is located, is:

$$PF+\text{floor}(firstPDCCH\text{-}MonitoringOccasionOfPO/140).$$

Optionally, the UE can also determine that the PF where the PO monitored by the UE itself is located, is the target PF. In this embodiment, the target PO is preferably determined.

Step 2: the UE determines the resource location of the PEI based on the target PO.

Optionally, the start location or end location of the PEI can be determined based on the location of the target PO.

An offset of PEI (that is, a start location or end location of PEI) and the target PO can be configured. The start location or end location of the PEI is determined by the position of the target PO and the offset, for example, the frame number (SFN_PEI) where the start/end location of PEI is located, needs to satisfy:

$$Y*Period\_SSB < SFN\_PO - SFN\_PEI \le (Y+1)*Period\_SSB$$

That is, $Y*Period\_SSB<Offset\le(Y+1)*Period\_SSB$, where SFN_PO is the SFN where the PF corresponding to the target PO is located.

Optionally, the offset can also be a negative number, that is, the PEI is in front of the SSB.

Value of the offset can also be related to the period of SSB. When the period of SSB is larger, the possible values of the offset are more or larger. When the period of SSB is smaller, the possible values of the offset are fewer or smaller. That is, the possible candidate values of the offset are proportional to the period of SSB.

The interval offset between PEI (that is, the start location or end location of PEI) and the target SSB can also be fixed, that is, the interval offset can be agreed upon by the protocol. For example, the PEI is located in a first slot of the first L frames of frame where the target PO is located.

Optionally, a duration of PEI can be configured or fixed, and the end location (or start location) of PEI is determined based on the start location (or end location) of PEI and the duration of PEI.

A distance between the end position of PEI and PO needs to be greater than or equal to min_gap, for example, the following conditions need to be satisfied: PO_location-PEI_end≥min_gap. The min_gap can be configured by the network side or reported by the UE. Or, the distance between the start location of PEI and PO needs to be greater than or equal to min_gap.

If the start location of PEI or the end location of PEI does not satisfy the above conditions, the start location or end location of PEI can be updated to be PEI_location-Period_SSB.

The UE starts monitoring the PEI at the start location of the PEI.

Step 3: the UE receives or detects the PEI at the resource location.

Steps for the network device to implement the paging early indication transmission method are corresponding to those of the UE and will not be repeated here.

Embodiment 4 is described by taking an example in which the resource location of the PEI is determined through the target PO. In this embodiment, a monitoring start location of the PEI is determined according to the target PO.

Step 1: determining a target PO.

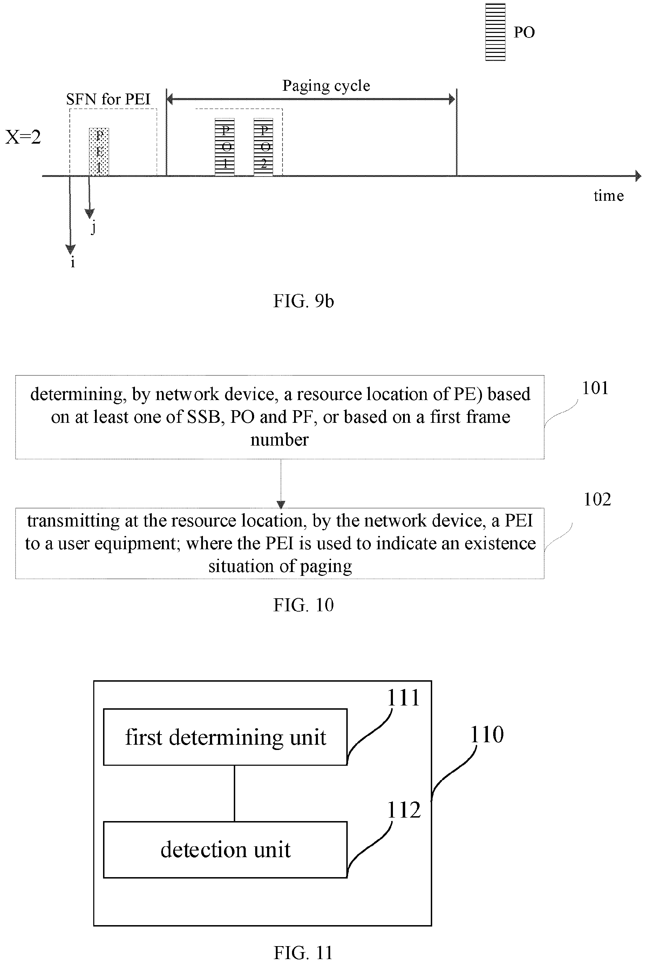

The step 1 of the embodiment 4 is implemented in the same manner as the step 1 of the embodiment 3. For a PO-dense scenario as shown in FIG. 8, Ns=4, N=T; for a PO-sparse scenario as shown in FIG. 9, Ns=1, N=T/4. The specific implementation process will not be repeated here.

Step 2: the UE determines the resource location of the PEI based on the location of the target PO.

Optionally, the monitoring start location of the PEI can be determined based on the location of the target PO.

An offset of the monitoring start location of the PEI and the target PO can be configured. The monitoring start location of the PEI is determined by the location of the target PO and the offset, for example, the frame number (SFN_PEI) where the monitoring start location of the PEI is located, needs to satisfy:

$$Y * Period\_SSB < SFN\_PO - SFN\_PEI \leq (Y + 1) * Period\_SSB$$

That is, Y*Period_SSB<Offset≤(Y+1)*Period_SSB, where SFN_PO is the SFN where the PF corresponding to the target PO is located.

Optionally, the offset can also be a negative number, that is, the monitoring start location of the PEI is in front of the SSB.

Value of the offset can also be related to the period of SSB. When the period of SSB is larger, the possible values of the offset are more or larger. When the period of SSB is smaller, the possible values of the offset are fewer or smaller. That is, the possible candidate values of the offset are proportional to the period of SSB.

The interval offset between the monitoring start location of the PEI and the target PO can also be fixed, that is, the interval offset can be agreed upon by the protocol. For example, the monitoring start location of the PEI is located in a first slot of the first L frames of frame where the target PO is located.

Optionally, a search space (SS) set of the PEI can be configured. The UE starts from the monitoring start location of the PEI to prepare for monitoring the PEI. The specific start location of PEI monitoring is indicated by "monitoringSlotPeriodicity AndOffset" of the search space set.

A monitoring end location of the PEI can be determined by the monitoring start location of the PEI (PEI_location) and duration, for example, PEI_end=PEI_location+duration. At this point, the duration is duration of multiple search spaces under multiple beams.

A distance between the monitoring end position of PEI (PEI_end) and PO needs to be greater than or equal to min_gap, for example, the following conditions need to be satisfied: PO_location-(PEI_location+duration)≥min_gap. The min_gap can be configured by the network side or reported by the UE.

If the monitoring end position of PEI does not satisfy this condition, the monitoring start location of PEI can be updated to be PEI_location-Period_SSB.

The UE starts monitoring the PEI at the monitoring start location of the PEI.

Step 3: the UE receives or detects the PEI at the resource location.

Steps for the network device to implement the paging early indication transmission method are corresponding to those of the UE and will not be repeated here.

In the embodiment of the present application, the UE determines the resource location of the PEI based on one or more of the target SSB, target PO and target PF, and receives or detects, at the resource location, the PEI which is used to indicate an existence situation of paging, thereby reducing the power consumption of the UE. Determining the resource location of PEI through SSB can make PEI closer to SSB, and in such case, greater power saving effect can be obtained. The UE in the idle state can receive the PEI immediately after receiving the SSB; when the PEI indicates that the there is no paging for the UE, the UE can enter the low-power sleep state as soon as possible, thereby reducing power consumption. One embodiment of the present application further provides a method for determining a resource location of PEI when one PEI is corresponding to multiple POs or multiple PFs.

Embodiment 5 is described by taking an example in which the resource location of the PEI is determined based on the first frame number and the first index.

The UE and gNB determine the first frame number and the first index. The first frame number is a radio frame number where the PEI is located. The first index is an index of the PEI in one or more PEIs included in a radio frame corresponding to the first frame number. The UE and gNB determine the resource location of the PEI according to the first frame number and the first index. The UE receives or detects, at the resource location, the PEI transmitted by the gNB.

The radio frame corresponding to the first frame number includes one or more PEIs, or start locations of one or more PEIs. The first index is an index of the PEI in at least one PEI included in the radio frame where the PEI is located, and is used to indicate a position of the PEI in the first frame number.

Step 1: the UE determines a first frame number, which is a radio frame number where the PEI is located and represented by PEI_SFN. The radio frame number where the PEI is located (that is, the first frame number) satisfies the following formula:

$$(PEI\_SFN+PF\_offset+PEI\_offset) \bmod T = (T \text{ div } N)*floor((UE\_ID \bmod N)/A)*A$$

where PEI_SFN is the frame number of the radio frame where PEI is located (that is, the first frame number); PF_offset is an offset used to determine PF; PEI_offset is an offset used to determine PEI_SFN; T is the DRX cycle; N is a total number of PFs in each DRX cycle; Ns is the number of POs included in each PF; X is the number of POs corresponding to one PEI; UE_ID is 5G-S-TMSI mod 1024. A=max(X/Ns,1), i.e., taking the maximum value of X/Ns and 1; or, A=max(floor(X/Ns),1), i.e., taking the maximum value of floor(X/Ns) and 1, where floor means rounding down. UE_ID is 5G-S-TMSI mod 1024.

For the above parameters, PF_offset, T, N and Ns can be paging parameters configured by the network. PEI_offset may be configured by the network device or agreed in a protocol, which is not limited in this embodiment. PEI_offset is used to describe radio frames between the frame number (PEI_SFN) where the PEI is located and the frame number (PF) where the PO is located, and its unit is a radio frame. X may be configured by the network device or agreed in the protocol, which is not limited in this embodiment.

Step 2: the UE determines the first index. The first index is an index of the PEI in the first frame number, or is an index of the PEI in at least one PEI included in the radio frame where the PEI is located, and is represented by PEI_i_s. For example, when a radio frame corresponding to a first frame number includes one PEI, then PEI_i_s=0; when the radio frame corresponding to the first frame number includes 2 PEIs, then PEI_i_s=0 or 1.

The first index may be determined in the following two manners:

Manner 1: the index of PEI in the first frame number satisfies the following formula:

$$PEI\_i\_s=(floor(UE\_ID/N) \bmod Ns) \bmod B$$

Where PEI_i_s is the first index, which can also be expressed as an index of PEI in one or more PEIs included in the radio frame corresponding to the first frame number; N is the total number of PFs in each DRX cycle; Ns is the number of POs included in each PF; X is the number of POs corresponding to one PEI; B=max(Ns/X,1) or B=max(floor(Ns/X),1); UE_ID is 5G-S-TMSI mod 1024. In the above parameters, T, N, and Ns can be paging parameters configured by the network device. X may be configured by the network device or agreed in a protocol, which is not limited in this embodiment.

Manner 2: the first index satisfies the following formula:

$$PEI\_i\_s=i\_s \bmod B$$

Where PEI_i_s is the first index, i_s is i_s corresponding to the PO determined by the UE; X is the number of POs corresponding to one PEI; Ns is the number of POs included in each PF; B=max(Ns/X, 1) or B=max(floor(Ns/X), 1). In the fifth embodiment, for the step 1 and the step 2, as shown in FIG. 9b, one PEI corresponds to 2 POs, X=2 for example. In FIG. 9b, a position j indicated by an arrow represents PEI_i_s of the first index, which can satisfy:

$$PEI\_i\_s=(floor(UE\_ID/N) \bmod Ns) \bmod B$$

where B=max(Ns/X,1) or B=max(floor(Ns/X), 1).

A position i indicated by an arrow indicates a position corresponding to the first frame number PEI_SFN, and the first frame number satisfies:

$$(PEI\_SFN+PF\_offset+PEI\_offset) \bmod T = (T \text{ div } N)*floor((UE\_ID \bmod N)/A)*A$$

where A=max(X/Ns,1)

The UE can determine the SFN where the PEI is located through the first frame number determined in the above step 1, and then determine the index of the PEI in at least one PEI included in the radio frame where the PEI is located based on the first index determined in the above step 2. The first index can be used to determine a specific resource location of the PEI in the first frame number. For example, if the first frame number includes 2 PEIs, then the network device configures two values for "firstPDCCH-MonitoringOccasionOfPEI". The resource location of the PEI corresponding to PEI_i_s=0 in the first frame number is determined based on a first value in "firstPDCCH-MonitoringOccasionOfPEI". The resource location of the PEI corresponding to PEI_i_s=1 in the first frame number is determined based on a second value in "firstPDCCH-MonitoringOccasionOfPEI". The following describes in more detail how to determine the resource location of the PEI based on the first index when the first frame number is determined.

The UE determines a PEI PDCCH monitoring occasion based on paging search space, first PEI PDCCH monitoring occasion "firstPDCCH-MonitoringOccasionOfPEI" configured in "DownlinkConfigCommonSIB" field and the number "nrofPDCCHMonitoringOccasionPerSSB-InPO" of paging PDCCH MOs corresponding to one SSB. When the paging search space is configured with "SearchSpaceId=0", the PEI PDCCH monitoring occasion is the same as the remaining minimum system information (RMSI).

When "SearchSpaceId" configured for the paging search space is not equal to 0, the UE monitors a (PEI_i_s+1)-th PEI. PEI is a set of "S*X" continuous PDCCH monitoring occasions, where S represents the number of actually transmitted SSBs determined based on Synchronization Signal and PBCH block (SSB) location information carried by SIB1; X represents the number of PDCCH MOs corresponding to each SSB configured in "nrofPDCCHMonitoringOccasionPerSSB-InPEI"; if value of X is not configured, X is equal to 1. When "firstPDCCH-MonitoringOccasionOfPEI" is configured, a start point of PDCCH MO in the (PEI_i_s+1)-th PEI is a (PEI_i_s+1)-th value in a high-level parameter "firstPDCCH-MonitoringOccasionOfPEI"; otherwise, the start point of the PDCCH MO in the (PEI_i_s+1)-th PEI is equal to i_s*S*X.

According to the above method, the UE and gNB can determine the resource location of the PEI based on the determined first frame number and first index. The PEI is the PEI that the UE needs to monitor, and the PEI is used to indicate the paging situation of the PO that the UE needs to monitor. The fifth embodiment provides a method of determining the resource location of the PEI based on the first frame number and the first index. The determination method is simpler for the UE and has less impact on the protocol.

One embodiment of the present application further provides a paging early indication transmission method, which is applied to a network device, as shown in FIG. 10, including:

Step 101: determining, by the network device, a resource location of the paging early indication (PEI) based on at least one of a target Synchronization Signal and PBCH block (SSB), a target paging occasion (PO) and a target paging frame (PF), or based on a first frame number;

Step 102: transmitting at the resource location, by the network device, a PEI to a user equipment; where the PEI is used to indicate an existence situation of paging.

In this embodiment, the target SSB is one SSB among multiple SSBs. The target PO is one PO among multiple POs. The target PF is one PF among multiple PFs. When the network device determines the resource location of the PEI, it may be determined based on one or more of the target SSB, target PO and target PF or a combination of multiple thereof.

Optionally, the first frame number is a frame number of a radio frame in which the PEI is located. In one embodiment, the network device can determine the resource location of the PEI according to the first frame number. The radio frame corresponding to the first frame number may include one or more PEIs, or start locations of one or more PEIs.

After the network device determines the resource location of the PEI, the network device transmits the PEI at the resource location. The PEI can be used to indicate the existence situation of paging, i.e., indicating whether there is paging, for example, "1" indicates that there is paging, and "0" indicates that there is no paging. The UE can determine the resource location of the PEI by itself, receives the PEI, and then determines whether the UE needs to receive paging messages. When the UE does not need to receive paging messages, the UE can enter a low power consumption or sleep state, thereby reducing power consumption of the UE.

It is to be noted that after the network device determines the resource location of the PEI, the network device transmits the PEI at the resource location. The PEI can be used to indicate the existence situation of paging, that is, the PEI indicates whether there is paging or not; or, when there is no paging, the network device does not transmit PEI at the determined resource location.

In the embodiment of the present application, the network device determines the resource location of the PEI based on one or more of the target SSB, target PO and target PF, or determines the resource location of the PEI based on the first frame number, thereby transmitting, at the resource location, the PEI which is used to indicate an existence situation of paging. The UE determines whether it needs to receive paging messages according to indication of PEI.

Determining the resource location of PEI through SSB can make PEI closer to SSB, and in such case, greater power saving effect can be obtained. One embodiment of the present application further provides a method for determining a resource location of PEI when one PEI is corresponding to multiple POs or multiple PFs.

Optionally, the method further includes: determining at least one of the target SSB, the target PO and the target PF.

Optionally, determining the target SSB includes: determining the target SSB according to a target parameter; where the target parameter include the target PO or target PF.

In this embodiment, the target SSB can be determined based on the target PO or the target PF, that is, the resource location of the PEI can be determined based on the target PO or the target PF; or, the target SSB can be determined based on the target PO or target PF, and the resource location of the PEI can be determined based on the target SSB.

Further, determining the target SSB according to the target parameter may include:

determining the target SSB according to a position of the target parameter and a distance between the target parameter and the target SSB; where the distance satisfies: greater than Y periods of SSBs and less than or equal to (Y+Y1) periods of SSBs, Y is the number of SSBs between the target SSB and the target parameter, $Y1 \geq 1$.

The determination manners of Y may include at least one of the following:

System message configuration;
Broadcast signaling configuration;
Agreement;
determined based on a first interval; where the first interval may be the minimum value of the distance between the end location of the PEI and the target PO or target PF, and the first interval may be configured or determined based on other parameters;
determined based on a first offset; where the first offset may be an offset between the resource location of the PEI and a resource location of the target SSB, the target PO or the target PF;
determined according to the number of beams of the SSB; it is to be noted that the SSB may include the target SSB or non-target SSB, and the number of beams of the target SSB is equal to the number of beams of the non-target SSB;
determined according to the number of beams of the PEI.

In this embodiment, after determining the target SSB, the resource location of the PEI can be determined according to the target SSB, so that the UE receives or detects the PEI at the resource location.

In this embodiment, the target SSB may be determined according to the position of the target PO or target PF and the distance between the target PO or target PF and the target SSB. By taking the target PO as an example, the distance satisfies:

$$Y*Period\_SSB < PO\_location - SSB\_location \leq (Y+1)*Period\_SSB$$

Where Period_SSB represents the period of SSB; POlocation represents a position of the target PO (for example, a frame number, a subframe number, a slot number or an OFDM symbol where a start location of the first MO of the target PO is located); SSB_location represents location of the target SSB (for example, a frame number, a subframe number, a slot number or an OFDM symbol where a start location or an end location of the target SSB is located); PO_location-SSB_location represents a distance. Preferably, Y1=1; when Y1 is greater than 1, the distance is the maximum distance or the minimum distance that satisfies the above conditions. At this point, the target SSB is SSB corresponding to the maximum distance or the minimum distance that satisfies the above conditions. Y is a function related to the number of SSBs between the target SSB and the target parameter.

As an optional embodiment, the manner of determining the target PO or determining the target PF may include one of the following:

(1) determining the target PO or target PF according to the first parameter; where the first parameter includes at least one of a total number (i.e., N) of PFs in each discontinuous reception (DRX) cycle, the number (i.e., Ns) of POs included in each PF and UE_ID;
(2) determining the target PO or target PF according to a second parameter; where the second parameter is the number of POs corresponding to one PEI;
(3) determining the target PO or target PF according to the period of PEI;
(4) when one PEI is corresponding to one PO, the target PO is a corresponding PO when the network device transmits PDCCH scrambled by a paging radio network temporary identifier (P-RNTI) for paging the UE, and the target PF is corresponding PF when the network device transmits PDCCH scrambled by a paging radio network temporary identifier (P-RNTI) for paging the UE.

In this embodiment, the network device determining the target PO or the target PF may include directly determining the resource location of the PEI based on the target PO or the target PF; or, determining the target SSB based on the target PO or the target PF, and determining the resource location of the PEI based on the target SSB.

Optionally, determining the resource location of the PEI based on at least one of the target SSB, target PO and target PF, includes:

determining the resource location of the PEI according to the resource location of the target SSB, or the target PO or the target PF, and a first offset; where the first offset is an offset between the resource location of the PEI and the resource location of the target SSB, or the target PO or the target PF.

The first offset may be configured by the network side, or may be agreed upon by a protocol, that is, an interval between the PEI and the target SSB, or an interval between the PEI and the target PO, or an interval between the PEI and the target PF, are fixed. By taking the target SSB as an example, the manner of determining the first offset may include:

(1): configured offset between PEI and the target SSB as PEI_location=SSB_location+Offsett; where PEI_location is a frame number, a subframe number, a lot number or OFDM symbol where a start location or an end location of the PEI is located; SSB_location is a frame number, a subframe number, a lot number or OFDM symbol where a start location of the target SSB is located;

It is to be noted that the first offset is less than a period length of the target SSB; or, the first offset is proportional to the period of the target SSB.

(2) a fixed interval between the PEI and the target SSB specified in the protocol. For example, the PEI is located in the next slot of the slot where the target SSB is located.

Specifically, the resource location of the PEI may include at least one of the following:

start location of the PEI;
end location of the PEI;
monitoring start location of the PEI;
monitoring end location of the PEI.

Optionally, the method further includes: when the resource location of the PEI includes the start location of the PEI and/or the monitoring start location of the PEI, determining the end location or monitoring end location of the PEI based on the start location and/or monitoring start location of the PEI as well as duration of the PEI.

The end location of PEI can be determined according to the start location and duration of PEI. The monitoring end location of the PEI can be determined based on the monitoring start location of the PEI and the duration of the PEI.

It is to be noted that if the end location or monitoring end location of the PEI is determined first, the start location or monitoring start location of the PEI can also be determined based on the duration.

In the embodiment of the present application, after the resource location of the PEI is determined based on one or more of the target SSB, target PO and target PF, it can further be judged whether the determined resource location satisfies a predetermined condition. When the condition is satisfied, the PEI can be transmitted at the determined resource location. The details are explained below.

Optionally, the method further includes: determining whether the resource location satisfies a first condition; if the first condition is not satisfied, updating the resource location to be a difference between the resource location and the period of the SSB.

The first condition includes: a distance between the resource location and the resource location of the target PO or target PF is greater than or equal to the first interval.

The first interval is the minimum value of the distance between the resource location of the PEI (preferably the end location or the monitoring end location) and the target PO or target PF. The resource location of the target PO or the target PF may be a position of the first MO of the target PO or a start location of the target PO, or the end location of the target PO.

In this embodiment, when determining whether the resource location satisfies the first condition, the end location or monitoring end location of the resource location may be judged. For example, the end location satisfies the condition: PO_location-PEI_end≥min_gap, where min_gap is the first interval.

When the resource location of the PEI meets the first condition, the step of transmitting at the resource location, the PEI to the UE in the step 102 may be performed. When the resource location of the PEI does not meet the first condition, the resource location needs to be updated as a difference between the resource location (that is, the resource location determined in the step 101) and the period of the SSB, that is, resource location updated as PEI_location-Period_SSB. That is, when the network device configures Y through the system message or broadcast signaling or Y is agreed in the protocol, the UE calculates and updates Y according to min_gap, and updates Y to Y+1.

Optionally, the PEI includes X beams, and the resource location of the PEI include: X resource locations corresponding to the PEI of the X beams.

The transmitting the PEI at the resource location to the UE, may include: when a first resource location of the X resource locations overlaps with a resource location of a first signal, transmitting the PEI at a second resource location, where the second resource location is a first resource location after the first resource location.

The first resource location is, for example, the K-th resource location in the X resource locations. The first signal may include at least one of SSB, channel state information reference signal (CSI-RS), time-frequency tracking reference signal (TRS), PDCCH, PDSCH, demodulation reference signal (DMRS).

By taking the first signal as an SSB and TRS signal as an example, when the K-th resource location in multiple resource locations completely or partially overlaps with the resource location where signals such as SSB and TRS are located, the K-th resource location is invalid PEI resource location, and the (K+1)-th resource location is used to transmit the PEI of the K-th beam, that is, invalid PEI resource locations can be dropped or skipped, and valid PEI resource locations are postponed.

As an optional embodiment, regarding the manner of determining the resource location of the PEI according to the first frame number, the method further includes:

determining the first frame number, where the first frame number is a frame number of a radio frame where the PEI is located. The network device determines the first frame number, that is, determines the frame number of the radio frame where the PEI is located. The first frame number may be represented by PEI_SFN.

Optionally, the method further includes: determining a first index, where the first index is an index of the PEI.

The determining the resource location of the PEI based on the first frame number, may include: determining the resource location of the PEI based on the first frame number and the first index.

In this embodiment, the first index is an index of a PEI, which may be an index of the PEI in at least one PEI included in the radio frame where the PEI is located. The first index can be represented by PEI_i_s. For example, when a radio frame corresponding to a first frame number includes one PEI, then PEI_i_s=0; when the radio frame corresponding to the first frame number includes 2 PEIs, then PEI_i_s=0 or 1.

In the embodiment of the present application, the determining, by the network device, the resource location of the PEI based on the first frame number, may include: determining the resource location of the PEI only based on the first frame number; or, determining the resource location of the PEI based on the first frame number and the first index. For example, when the radio frame corresponding to the first frame number includes only one PEI, the resource location of the PEI can be determined only based on the first frame number; when the radio frame corresponding to the first frame number includes multiple PEIs, the resource location of the PEI can be determined based on the first frame number and the first index.

Optionally, the determining the first frame number, includes: determining the first frame number according to a third parameter, where the third parameter includes at least one of a second interval (PEI_offset), a paging frame offset (PF_offset), DRX cycle (T), a total number (N) of PFs in each DRX cycle, the number (Ns) of POs included in each PF, the number (X) of POs corresponding to one PEI, and UE_ID.

The second interval is an interval used to determine the first frame number, and the second interval can be used to describe the number of radio frames between the first frame number and the frame number (i.e., PF) where the PO is located. The paging frame offset is used to determine the offset of the PF. The first frame number may be determined according to one or more of the third parameters.

Optionally, the first frame number is related to a product of a fourth parameter, a fifth parameter and a sixth parameter. The fourth parameter is related to at least one of the DRX cycle and the total number of PFs in each DRX cycle. Optionally, if the fourth parameter is related to the DRX cycle (T) and the total number (N) of PFs in each DRX cycle, then the fourth parameter satisfies (T div N).

The fifth parameter is related to at least one of UE ID, the total number of PFs in each DRX cycle, and the sixth parameter.

The sixth parameter is related to at least one of the number of POs corresponding to one PEI and the number of POs included in each PF.

Optionally, if the sixth parameter is related to the number (X) of POs corresponding to one PEI and the number (Ns) of POs included in each PF, then the sixth parameter (A) can satisfy: A=max(X/Ns,1), i.e., taking the maximum value of X/Ns and 1; or, the sixth parameter (A) can satisfy: A=max(floor(X/Ns), 1), i.e., taking the maximum value of floor(X/Ns) and 1, where floor means rounding down.

If the fifth parameter is related to UE_ID, the total number (N) of PFs in each DRX cycle and the sixth parameter (A), then the fifth parameter can satisfy: floor((UE_ID mod N)/A).

Specifically, a result of modulo operation of a sum of the first frame number, the second interval and the paging frame offset, and the DRX cycle, is equal to a product of the fourth parameter, the fifth parameter and the sixth parameter.

Assuming that the fourth parameter satisfies (T div N), the fifth parameter satisfies floor((UE_ID mod N)/A), and the sixth parameter satisfies A=max(X/Ns, 1) or A=max(floor(X/Ns), 1) as an example, then the first frame number satisfies the following formula:

$$(PEI\_SFN+PF\_offset+PEI\_offset) \bmod T=(T \text{ div } N)*floor((UE\_ID \bmod N)/A)*A$$

where PEI_SFN is the frame number (that is, the first frame number) of the radio frame where PEI is located; PF_offset is the offset used to determine PF; PEI_offset is the offset used to determine PEI_SFN; T is the DRX cycle; N is the total number of PFs in each DRX cycle; Ns is the number of POs included in each PF; X is the number of POs corresponding to one PEI; UE_ID is 5G-S-TMSI mod 1024.

It is to be noted that, PF_offset, T, N and Ns can be paging parameters configured by the network. PEI_SFN may be configured by the network device or agreed in a protocol, which is not limited in this embodiment. PEI_offset is used to describe radio frames between the frame number (PEI_SFN) where the PEI is located and the frame number (PF) where the PO is located, and its unit is a radio frame. X may be configured by the network device or agreed in the protocol, which is not limited in this embodiment.

As an optional embodiment, the determining the first index, may include:

manner (a): determining the first index according to a seventh parameter; where the seventh parameter includes at least one of: UE_ID, the total number (N) of PFs in each DRX cycle, and the number (Ns) of POs included in each PF, and the number (X) of POs corresponding to one PEI;
or,
manner (b): determining the first index based on an index (i_s) of PO, the number (Ns) of POs included in each PF, and the number (X) of POs corresponding to one PEI. The index of the PO may be an index of the PO received or detected by the UE.

In this embodiment, the UE determines the first index, which is an index of the PEI in the first frame number, or an index of PEI in at least one PEI included in the radio frame where the PEI is located. The first index can be represented with PEI_i_s. For the above manner (a), if the seventh parameter includes: UE_ID, the total number (N) of PFs in each DRX cycle, the number (Ns) of POs included in each PF, and the number (X) of POs corresponding to one PEI, then the first index can satisfy:

$$PEI\_i\_s=(floor(UE\_ID/N) \bmod Ns) \bmod B$$

Where PEI_i_s is the first index, which can also be expressed as an index of PEI in one or more PEIs included in the radio frame corresponding to the first frame number; N is the total number of PFs in each DRX cycle; Ns is the number of POs included in each PF; X is the number of POs corresponding to one PEI; B=max(Ns/X,1) or B=max(floor(Ns/X), 1); UE_ID is 5G-S-TMSI mod 1024.

T, N, and Ns can be paging parameters configured by the network device. X may be configured by the network device or agreed in a protocol, which is not limited in this embodiment.

For the manner (b), that is, the first index can be determined based on the index (i_s) of PO, the number (Ns) of POs included in each PF, and the number (X) of POs corresponding to one PEI, then the first index can satisfy:

$$PEI\_i\_s=i\_s \bmod B$$

Where PEI_i_s is the first index, i_s is i_s corresponding to the PO determined by the UE; X is the number of POs corresponding to one PEI; Ns is the number of POs included in each PF; B=max(Ns/X,1) or B=max(floor(Ns/X), 1).

In this embodiment, when the network device determines the resource location of the PEI, the network device may determine the resource location of the PEI based on the first frame number. The network device may determine the resource location of the PEI only based on the first frame number, or based on the first frame number and the first index, which is simple for the network device and has less impact on the protocol.

It is to be noted that the implementation in which the UE determines the resource location of the PEI based on at least one of the target SSB, target PO, and target PF, or based on the first frame number, is also applicable to the method embodiments of the network device, as shown in FIG. 2 to FIG. 9b, which will not be repeated here.

The above embodiment illustrates the paging early indication transmission method of the present disclosure, and the corresponding device in one embodiment will be further described with reference to the accompanying drawings.

Specifically, as shown in FIG. 11, one embodiment of the present application provides a paging early indication transmission apparatus 110, which is applied to user equipment and includes:

a first determining unit 111 configured to determine a resource location of the paging early indication (PEI) based on at least one of a target Synchronization Signal and PBCH block (SSB), a target paging occasion (PO) and a target paging frame (PF), or based on a first frame number;
a detection unit 112 configured to receive or detect, at the resource location, PEI transmitted by a network device.

The PEI is used to indicate the existence situation of paging.

Optionally, the apparatus further includes:

a third determining unit is configured to determine at least one of the target SSB, the target PO and the target PF.

Optionally, the third determining unit includes:

a first determination subunit configured to determine the target SSB according to the target parameter;

Where the target parameter includes target PO or target PF.

Optionally, the first determination subunit is specifically configured to determine the target SSB according to a position of the target parameter and a distance between the target parameter and the target SSB.

The distance satisfies: greater than Y periods of SSBs and less than or equal to (Y+Y1) periods of SSBs, Y is the number of SSBs between the target SSB and the target parameter, $Y1 \geq 1$.

Optionally, the determination manners of Y may include at least one of the following:

System message configuration;
Broadcast signaling configuration;
Agreement;
determined based on a first interval;
determined based on a first offset;
determined according to the number of beams of the SSB;
determined according to the number of beams of the PEI.

Optionally, the manner of determining the target PO or determining the target PF may include one of the following:

determining the target PO or target PF according to the first parameter; where the first parameter includes at least one of a total number of PFs in each discontinuous reception (DRX) cycle, the number of POs included in each PF and UE_ID;
determining the target PO or target PF according to a second parameter; where the second parameter is the number of POs corresponding to one PEI;
determining the target PO or target PF according to the period of PEI;
when one PEI is corresponding to one PO, the target PO is PO that the UE needs to monitor, and the target PF is a PF corresponding to the PO that the UE needs to monitor.

Optionally, the first determining unit 111 is specifically configured to determine the resource location of the PEI according to the resource location of the target SSB, or the target PO or the target PF, and the first offset;
where the first offset is an offset between the resource location of the PEI and the resource location of the target SSB, or the target PO or the target PF.

Optionally, the resource location of the PEI may include at least one of the following:

start location of the PEI;
end location of the PEI;
monitoring start location of the PEI;
monitoring end location of the PEI.

Optionally, the apparatus further includes:

a fourth determination unit configured to, when the resource location of the PEI includes the start location of the PEI and/or the monitoring start location of the PEI, determine the end location or monitoring end location of the PEI based on the start location and/or monitoring start location of the PEI as well as duration of the PEI.

Optionally, the first offset is less than the period length of the target SSB; or, the first offset is proportional to the period of the target SSB.

Optionally, the apparatus further includes:

a fifth determination unit configured to determine whether the resource location satisfies a first condition;

a first updating unit configured to, if the first condition is not satisfied, update the resource location to be a difference between the resource location and the period of the SSB.

Optionally, the first condition includes: a distance between the resource location and the resource location of the target PO or target PF is greater than or equal to the first interval.

Optionally, the PEI includes X beams, and the resource location of the PEI include: X resource locations corresponding to the PEI of the X beams.

The detection unit is specifically configured to, when a first resource location of the X resource locations overlaps with a resource location of a first signal, receive or detect the PEI at a second resource location, where the second resource location is a first resource location after the first resource location.

Optionally, the apparatus further includes a ninth determining unit configured to determine a first frame number, where the first frame number is a frame number of a radio frame where the PEI is located.

Optionally, the apparatus further includes a tenth determination unit configured to determine a first index, where the first index is an index of the PEI.

The first determining unit is specifically configured to determine the resource location of the PEI according to the first frame number and the first index.

Optionally, the ninth determination unit is specifically configured to determine the first frame number according to a third parameter, where the third parameter includes at least one of a second interval, a paging frame offset, DRX cycle, a total number of PFs in each DRX cycle, the number of POs included in each PF, the number of POs corresponding to one PEI, and UE_ID.

Optionally, the first frame number is related to a product of a fourth parameter, a fifth parameter and a sixth parameter.

The fourth parameter is related to at least one of the DRX cycle and the total number of PFs in each DRX cycle.

The fifth parameter is related to at least one of UE ID, the total number of PFs in each DRX cycle, and the sixth parameter.

The sixth parameter is related to at least one of the number of POs corresponding to one PEI and the number of POs included in each PF.

Optionally, a result of modulo operation of a sum of the first frame number, the second interval and the paging frame offset, and the DRX cycle, is equal to a product of the fourth parameter, the fifth parameter and the sixth parameter.

Optionally, the tenth determination unit is specifically configured to determine the first index according to a seventh parameter, where the seventh parameter includes at least one of: UE_ID, the total number of PFs in each DRX cycle, and the number of POs included in each PF, and the number of POs corresponding to one PEI;

or,

determine the first index based on an index of PO, the number of POs included in each PF, and the number of POs corresponding to one PEI.

In the embodiment of the present application, the UE determines the resource location of the PEI based on one or more of the target SSB, target PO and target PF, or determines the resource location of the PEI based on the first frame number, and receives or detects, at the resource location, the PEI which is used to indicate an existence situation of paging, thereby reducing the power consumption of the UE.

It is to be noted here that the above apparatus provided by the embodiments of the present disclosure can implement all the method steps implemented by the above method embodiments applied to the UE, and can achieve the same technical effect. The parts and beneficial effects in this embodiment that are the same as those in the method embodiment will not be described in detail here.

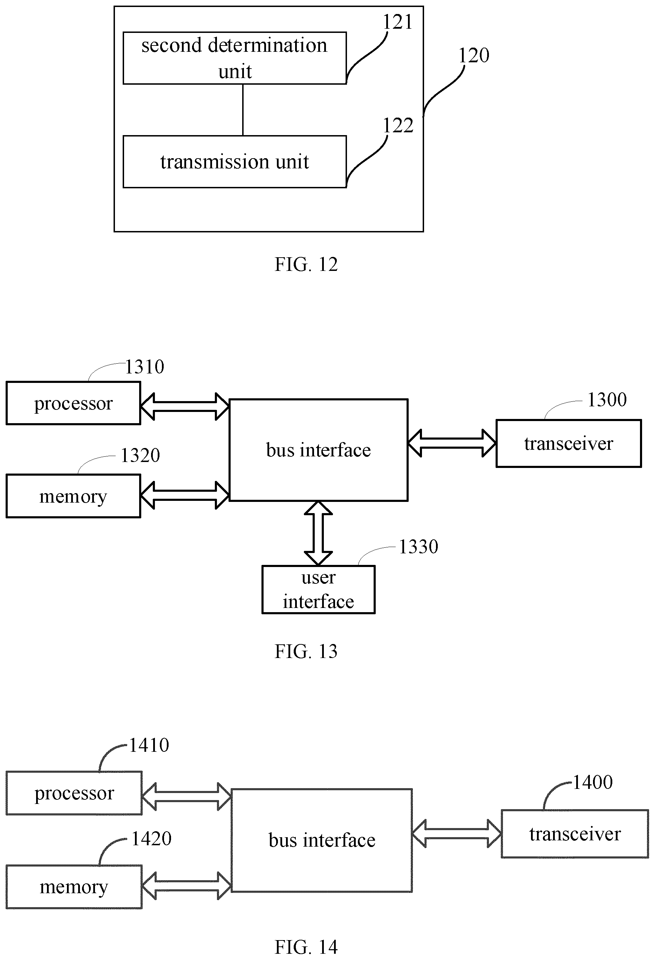

Specifically, as shown in FIG. 12, one embodiment of the present application provides a paging early indication transmission apparatus 120, which is applied to a network device, including:

a second determination unit 121 configured to determine a resource location of the paging early indication (PEI) based on at least one of a target Synchronization Signal and PBCH block (SSB), a target paging occasion (PO) and a target paging frame (PF), or based on a first frame number;

a transmission unit 122 configured to transmit the PEI to the user equipment at the resource location; where the PEI is used to indicate an existence situation of paging.

Optionally, the apparatus further includes: a sixth determination unit configured to determine at least one of the target SSB, the target PO, and the target PF.

Optionally, the sixth determining unit includes:

a second determination subunit configured to determine the target SSB according to a target parameter;
where the target parameter includes: target PO or target PF.

Optionally, the second determination subunit is specifically configured to determine the target SSB according to a position of the target parameter and a distance between the target parameter and the target SSB; where the distance satisfies: greater than Y periods of SSBs and less than or equal to (Y+Y1) periods of SSBs, Y is the number of SSBs between the target SSB and the target parameter, Y1 ≥ 1.

Optionally, determination manners of Y may include at least one of the following:

System message configuration;
Broadcast signaling configuration;
Agreement;
determined based on a first interval;
determined based on a first offset;
determined according to the number of beams of the SSB;
determined according to the number of beams of the PEI.

Optionally, the manner of determining the target PO or determining the target PF may include one of the following:

determining the target PO or target PF according to the first parameter; where the first parameter includes at least one of a total number of PFs in each discontinuous reception (DRX) cycle, the number of POs included in each PF and UE_ID;
determining the target PO or target PF according to a second parameter; where the second parameter is the number of POs corresponding to one PEI;
determining the target PO or target PF according to the period of PEI;
when one PEI is corresponding to one PO, the target PO is a corresponding PO when the network device transmits PDCCH scrambled by a paging radio network temporary identifier (P-RNTI) for paging the UE, and the target PF is corresponding PF when the network device transmits PDCCH scrambled by a paging radio network temporary identifier (P-RNTI) for paging the UE.

Optionally, the second determination unit is specifically configured to determine the resource location of the PEI according to the resource location of the target SSB, or the target PO or the target PF, and the first offset; where the first offset is an offset between the resource location of the PEI and the resource location of the target SSB, or the target PO or the target PF.

Optionally, the resource location of the PEI may include at least one of the following:

start location of the PEI;
end location of the PEI;
monitoring start location of the PEI;
monitoring end location of the PEI.

Optionally, the apparatus further includes:
a seventh determination unit configured to, when the resource location of the PEI includes the start location of the PEI and/or the monitoring start location of the PEI, determine the end location or monitoring end location of the PEI based on the start location and/or monitoring start location of the PEI as well as duration of the PEI.

Optionally, the first offset is less than the period length of the target SSB;
or
the first offset is proportional to the period of the target SSB.

Optionally, the apparatus further includes:

an eighth determination unit configured to determine whether the resource location satisfies a first condition;
a second updating unit configured to, if the first condition is not satisfied, update the resource location to be a difference between the resource location and the period of the SSB.

Optionally, the first condition includes: a distance between the resource location and the resource location of the target PO or target PF is greater than or equal to the first interval.

Optionally, the PEI includes X beams, and the resource location of the PEI include: X resource locations corresponding to the PEI of the X beams.

The transmission unit is specifically configured to:
when a first resource location of the X resource locations overlaps with a resource location of a first signal, transmit the PEI at a second resource location to the UE, where the second resource location is a first resource location after the first resource location.

Optionally, the apparatus further includes an eleventh determining unit configured to determine a first frame number, where the first frame number is a frame number of a radio frame where the PEI is located.

Optionally, the apparatus further includes a twelfth determining unit configured to determine a first index, where the first index is an index of the PEI.

The second determining unit is specifically configured to determine the resource location of the PEI according to the first frame number and the first index.

Optionally, the eleventh determination unit is specifically configured to determine the first frame number according to a third parameter, where the third parameter includes at least one of a second interval, a paging frame offset, DRX cycle, a total number of PFs in each DRX cycle, the number of POs included in each PF, the number of POs corresponding to one PEI, and UE_ID.

Optionally, the first frame number is related to a product of a fourth parameter, a fifth parameter and a sixth parameter.

The fourth parameter is related to at least one of the DRX cycle and the total number of PFs in each DRX cycle.

The fifth parameter is related to at least one of UE ID, the total number of PFs in each DRX cycle, and the sixth parameter.

The sixth parameter is related to at least one of the number of POs corresponding to one PEI and the number of POs included in each PF.

Optionally, a result of modulo operation of a sum of the first frame number, the second interval and the paging frame offset, and the DRX cycle, is equal to a product of the fourth parameter, the fifth parameter and the sixth parameter.

Optionally, the twelfth determining unit is specifically configured to determine the first index according to a seventh parameter, where the seventh parameter includes at least one of: UE_ID, the total number of PFs in each DRX cycle, and the number of POs included in each PF, and the number of POs corresponding to one PEI;

or,

determine the first index based on an index of PO, the number of POs included in each PF, and the number of POs corresponding to one PEI.

In the embodiment of the present application, the network device determines the resource location of the PEI based on one or more of the target SSB, target PO and target PF, or determines the resource location of the PEI based on the first frame number, thereby transmitting, at the resource location, the PEI which is used to indicate an existence situation of paging. The UE determines whether it needs to receive paging messages according to indication of PEI.

It is to be noted here that the above apparatus provided by the embodiment of the present disclosure can implement all the method steps implemented by the above method embodiment applied to the network device, and can achieve the same technical effect. The parts and beneficial effects in this embodiment that are the same as those in the method embodiment will not be described in detail here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

As shown in FIG. 13, one embodiment of the present disclosure further provides a user equipment (UE), including: a memory 1320, a transceiver 1300, and a processor 1310. The memory 1320 is used to store computer programs. The transceiver 1300 is used to transmit and receive data under the control of the processor 1310. The processor 1310 is used to read the computer programs in the memory and perform the following operations:

determining a resource location of the paging early indication (PEI) based on at least one of a target Synchronization Signal and PBCH block (SSB), a target paging occasion (PO) and a target paging frame (PF), or based on a first frame number;

receiving or detecting at the resource location, PEI transmitted by the network device; where the PEI is used to indicate an existence situation of paging.

Optionally, the processor is configured to read the computer program in the memory and perform the following operations:

determine at least one of the target SSB, the target PO and the target PF.

Optionally, the processor is configured to read the computer program in the memory and perform the following operations:

determining the target SSB according to the target parameter;
where the target parameter includes target PO or target PF.

Optionally, the processor is configured to read the computer program in the memory and perform the following operations:

determining the target SSB according to a position of the target parameter and a distance between the target parameter and the target SSB.

The distance satisfies: greater than Y periods of SSBs and less than or equal to (Y+Y1) periods of SSBs, Y is the number of SSBs between the target SSB and the target parameter, $Y1 \geq 1$.

Optionally, the determination manners of Y may include at least one of the following:

System message configuration;
Broadcast signaling configuration;
Agreement;
determined based on a first interval;
determined based on a first offset;
determined according to the number of beams of the SSB;
determined according to the number of beams of the PEI.

Optionally, the manner of determining the target PO or determining the target PF may include one of the following:

determining the target PO or target PF according to the first parameter; where the first parameter includes at least one of a total number of PFs in each discontinuous reception (DRX) cycle, the number of POs included in each PF and UE_ID;
determining the target PO or target PF according to a second parameter; where the second parameter is the number of POs corresponding to one PEI;
determining the target PO or target PF according to the period of PEI;
when one PEI is corresponding to one PO, the target PO is PO that the UE needs to monitor, and the target PF is a PF corresponding to the PO that the UE needs to monitor.

Optionally, the processor is configured to read the computer program in the memory and perform the following operations:

determining the resource location of the PEI according to the resource location of the target SSB, or the target PO or the target PF, and the first offset;
where the first offset is an offset between the resource location of the PEI and the resource location of the target SSB, or the target PO or the target PF.

Optionally, the resource location of the PEI may include at least one of the following:

start location of the PEI;
end location of the PEI;
monitoring start location of the PEI;
monitoring end location of the PEI.

Optionally, the processor is configured to read the computer program in the memory and perform the following operations:

when the resource location of the PEI includes the start location of the PEI and/or the monitoring start location of the PEI, determining the end location or monitoring end location of the PEI based on the start location and/or monitoring start location of the PEI as well as duration of the PEI.

Optionally, the first offset is less than the period length of the target SSB; or, the first offset is proportional to the period of the target SSB.

Optionally, the processor is configured to read the computer program in the memory and perform the following operations:

determining whether the resource location satisfies a first condition;
if the first condition is not satisfied, updating the resource location to be a difference between the resource location and the period of the SSB.

Optionally, the first condition includes: a distance between the resource location and the resource location of the target PO or target PF is greater than or equal to the first interval.
Optionally, the PEI includes X beams, and the resource location of the PEI include: X resource locations corresponding to the PEI of the X beams.
The processor is configured to read the computer program in the memory and perform the following operations:

when a first resource location of the X resource locations overlaps with a resource location of a first signal, receiving or detecting the PEI at a second resource location,
where the second resource location is a first resource location after the first resource location.

Optionally, the processor is configured to read the computer program in the memory and perform the following operations:
determining a first frame number, where the first frame number is a frame number of a radio frame where the PEI is located.
Optionally, the processor is configured to read the computer program in the memory and perform the following operations:
determining a first index, where the first index is an index of the PEI.
The processor determining the resource location of the PEI according to the first frame number, includes:
determining the resource location of the PEI according to the first frame number and the first index.
Optionally, the processor is configured to read the computer program in the memory and perform the following operations:
determining the first frame number according to a third parameter, where the third parameter includes at least one of a second interval, a paging frame offset, DRX cycle, a total number of PFs in each DRX cycle, the number of POs included in each PF, the number of POs corresponding to one PEI, and UE_ID.
Optionally, the first frame number is related to a product of a fourth parameter, a fifth parameter and a sixth parameter.
The fourth parameter is related to at least one of the DRX cycle and the total number of PFs in each DRX cycle.
The fifth parameter is related to at least one of UE ID, the total number of PFs in each DRX cycle, and the sixth parameter.
The sixth parameter is related to at least one of the number of POs corresponding to one PEI and the number of POs included in each PF.
Optionally, a result of modulo operation of a sum of the first frame number, the second interval and the paging frame offset, and the DRX cycle, is equal to a product of the fourth parameter, the fifth parameter and the sixth parameter.
Optionally, the processor is configured to read the computer program in the memory and perform the following operations:

determining the first index according to a seventh parameter, where the seventh parameter includes at least one of: UE_ID, the total number of PFs in each DRX cycle, and the number of POs included in each PF, and the number of POs corresponding to one PEI;
or,
determining the first index based on an index of PO, the number of POs included in each PF, and the number of POs corresponding to one PEI.

In the embodiment of the present application, the UE determines the resource location of the PEI based on one or more of the target SSB, target PO and target PF, or determines the resource location of the PEI based on the first frame number, and receives or detects, at the resource location, the PEI which is used to indicate an existence situation of paging, thereby reducing the power consumption of the UE.
It is to be noted that, in FIG. 13, a bus architecture may include any number of interconnected bus and bridge. Specifically, various circuits of one or more processors, which are represented by the processor 1310, and one or more memories, which are represented by the memory 1320, are linked together. The bus architecture may link various other circuits, such as a peripheral device, voltage regulator and a power management circuit together. These features are well known in this field; therefore, this disclosure does not make further description on these features. The bus interface provides an interface. The transceiver 1310 may be multiple elements, including a transmitter and a receiver and provide units, which communicate with other devices on the transmission medium. For different UEs, a user interface 1330 may also be an interface capable of externally connecting required devices, and the connected devices include but are not limited to keypads, displays, speakers, microphones, joysticks, etc. The processor 1310 is responsible for managing the bus architecture and the normal processing. The memory 1320 may be used to store data used by the processor 1310 for performing operations.

Optionally, the processor 1310 may be a central processing unit (CPU), an application specific integrated circuit (ASIC), a field-programmable gate array (FPGA) or a complex programmable logic device (CPLD). The processor may also adopt multi-core architecture.

The processor is configured to execute any of the methods provided by the embodiments of the present application according to obtained executable instructions by calling the computer program stored in the memory. The processor and the memory can also be physically separated.

It is to be noted here that the above UE provided by the embodiments of the present disclosure can implement all the method steps implemented by the above method embodiments applied to the UE, and can achieve the same technical effect. The parts and beneficial effects in this embodiment that are the same as those in the method embodiment will not be described in detail here.

As shown in FIG. 14, one embodiment of the present disclosure further provides a network device, including: a memory 1420, a transceiver 1400, and a processor 1410. The memory 1420 is used to store computer programs. The transceiver 1400 is used to transmit and receive data under the control of the processor 1410. The processor 1410 is used to read the computer program in the memory and perform the following operations:

determining a resource location of the paging early indication (PEI) based on at least one of a target Synchronization Signal and PBCH block (SSB), a target paging occasion (PO) and a target paging frame (PF), or based on a first frame number.

The transceiver 1400 is configured to transmit the PEI to the user equipment at the resource location; where the PEI is used to indicate an existence situation of paging.

Optionally, the processor is configured to read the computer program in the memory and perform the following operations:

determining at least one of the target SSB, the target PO, and the target PF.

Optionally, the processor is configured to read the computer program in the memory and perform the following operations:

determining the target SSB according to a target parameter;
where the target parameter includes: target PO or target PF.

Optionally, the processor is configured to read the computer program in the memory and perform the following operations:

determining the target SSB according to a position of the target parameter and a distance between the target parameter and the target SSB;
where the distance satisfies: greater than Y periods of SSBs and less than or equal to (Y+Y1) periods of SSBs, Y is the number of SSBs between the target SSB and the target parameter, $Y1 \geq 1$.

Optionally, determination manners of Y may include at least one of the following:

System message configuration;
Broadcast signaling configuration;
Agreement;
determined based on a first interval;
determined based on a first offset;
determined according to the number of beams of the SSB;
determined according to the number of beams of the PEI.

Optionally, the manner of determining the target PO or determining the target PF may include one of the following:

determining the target PO or target PF according to the first parameter; where the first parameter includes at least one of a total number of PFs in each discontinuous reception (DRX) cycle, the number of POs included in each PF and UE_ID;
determining the target PO or target PF according to a second parameter; where the second parameter is the number of POs corresponding to one PEI;

determining the target PO or target PF according to the period of PEI;

when one PEI is corresponding to one PO, the target PO is a corresponding PO when the network device transmits PDCCH scrambled by a paging radio network temporary identifier (P-RNTI) for paging the UE, and the target PF is corresponding PF when the network device transmits PDCCH scrambled by a paging radio network temporary identifier (P-RNTI) for paging the UE.

Optionally, the processor is configured to read the computer program in the memory and perform the following operations:

determining the resource location of the PEI according to the resource location of the target SSB, or the target PO or the target PF, and the first offset; where the first offset is an offset between the resource location of the PEI and the resource location of the target SSB, or the target PO or the target PF.

Optionally, the resource location of the PEI may include at least one of the following:

start location of the PEI;

end location of the PEI;

monitoring start location of the PEI;

monitoring end location of the PEI.

Optionally, the processor is configured to read the computer program in the memory and perform the following operations:

when the resource location of the PEI includes the start location of the PEI and/or the monitoring start location of the PEI, determining the end location and/or monitoring end location of the PEI based on the start location and/or monitoring start location of the PEI as well as duration of the PEI.

Optionally, the first offset is less than the period length of the target SSB;

or

the first offset is proportional to the period of the target SSB.

Optionally, the processor is configured to read the computer program in the memory and perform the following operations:

determining whether the resource location satisfies a first condition;

if the first condition is not satisfied, updating the resource location to be a difference between the resource location and the period of the SSB.

Optionally, the first condition includes: a distance between the resource location and the resource location of the target PO or target PF is greater than or equal to the first interval.

Optionally, the PEI includes X beams, and the resource location of the PEI include: X resource locations corresponding to the PEI of the X beams.

Optionally, the processor is configured to read the computer program in the memory and perform the following operations:

when a first resource location of the X resource locations overlaps with a resource location of a first signal, transmitting the PEI at a second resource location to the UE, where the second resource location is a first resource location after the first resource location.

Optionally, the processor is configured to read the computer program in the memory and perform the following operations:

determining a first frame number, where the first frame number is a frame number of a radio frame where the PEI is located.

The determining the resource location of the PEI according to the first frame number, includes: determining the resource location of the PEI according to the first frame number and the first index.

Optionally, the processor is configured to read the computer program in the memory and perform the following operations:

determining the first frame number according to a third parameter, where the third parameter includes at least one of a second interval, a paging frame offset, DRX cycle, a total number of PFs in each DRX cycle, the number of POs included in each PF, the number of POs corresponding to one PEI, and UE_ID.

Optionally, the first frame number is related to a product of a fourth parameter, a fifth parameter and a sixth parameter.

The fourth parameter is related to at least one of the DRX cycle and the total number of PFs in each DRX cycle.

The fifth parameter is related to at least one of UE ID, the total number of PFs in each DRX cycle, and the sixth parameter.

The sixth parameter is related to at least one of the number of POs corresponding to one PEI and the number of POs included in each PF.

Optionally, a result of modulo operation of a sum of the first frame number, the second interval and the paging frame offset, and the DRX cycle, is equal to a product of the fourth parameter, the fifth parameter and the sixth parameter.

Optionally, the processor is configured to read the computer program in the memory and perform the following operations:

determining the first index according to a seventh parameter, where the seventh parameter includes at least one of: UE_ID, the total number of PFs in each DRX cycle, and the number of POs included in each PF, and the number of POs corresponding to one PEI;
or,
determining the first index based on an index of PO, the number of POs included in each PF, and the number of POs corresponding to one PEI.

In the embodiment of the present application, the network device determines the resource location of the PEI based on one or more of the target SSB, target PO and target PF, or determines the resource location of the PEI based on the first frame number, thereby transmitting, at the resource location, the PEI which is used to indicate an existence situation of paging. The UE determines whether it needs to receive paging messages according to indication of PEI.

In FIG. 14, a bus architecture may include any number of interconnected bus and bridge. Specifically, various circuits of one or more processors, which are represented by the processor 1410, and one or more memories, which are represented by the memory 1420, are linked together. The bus architecture may link various other circuits, such as a peripheral device, voltage regulator and a power management circuit together. These features are well known in this field; therefore, this disclosure does not make further description on these features. The bus interface provides an interface. The transceiver 1400 may be multiple elements, including a transmitter and a receiver and provide units, which communicate with other devices on the transmission medium. The processor 1410 is responsible for managing the bus architecture and the normal processing. The memory 1420 may be used to store data used by the processor 1410 for performing operations.

The processor 1410 may be a central processing unit (CPU), an application specific integrated circuit (ASIC), a field-programmable gate array (FPGA) or a complex programmable logic device (CPLD). The processor may also adopt multi-core architecture.

It is to be noted here that the above network device provided by the embodiment of the present disclosure can implement all the method steps implemented by the above method embodiment applied to the network device, and can achieve the same technical effect. The parts and beneficial effects in this embodiment that are the same as those in the method embodiment will not be described in detail here.

One embodiment of the present disclosure further provides a processor-readable storage medium, which includes a computer program stored thereon. When the program is executed by a processor, the steps of the paging early indication transmission method are implemented, with the same technical effect achieved, which will not be repeated here to avoid repetition. The readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, non-volatile memory (Nand flash), solid-state drive (SSD)).

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It is to be noted that division of units in the embodiment of the present disclosure is only a logical function division; in actual implementation, all or part of the units may be integrated into one physical entity, or may also be physically separated. All of these units may be implemented in the form of using processing components to call software, or may be implemented by hardware, or some units are implemented in the form of using processing components to call software and some units are implemented by hardware. For example, the determination unit may be a separate processing element, or may be integrated into a chip of the above device; in addition, the determination unit may also be stored in the form of program codes in the memory of the above device, and is called by a certain processing element of the above device to execute the function of the above determination unit. The implementation of other units is similar. In addition, all or part of these units may be integrated together or implemented independently. The processing element described here may be an integrated circuit with signal processing capabilities. In the implementation process, each step of the above method or each of the above units may be completed by instructions of hardware integrated logic circuits or software in the processor element.

For example, each module, unit, sub-unit or sub-module may be one or more integrated circuits configured to implement the above method, such as one or more application specific integrated circuits (ASICs), or one or multiple digital signal processors (DSP), or one or more field programmable gate arrays (FPGA). For another example, when one of the above units is implemented in the form of using a processing element to call program codes, the processing element may be a general-purpose processor, such as a central processing unit (CPU) or other processors that can call the program codes. For another example, these units may be integrated together and implemented in the form of a system-on-a-chip (SOC).

The terms "first", "second" and the like in the description and claims of the present disclosure are used to distinguish similar objects and are not necessarily used to describe a specific order or sequence. It is to be understood that data so used are interchangeable under appropriate circumstances so that the embodiments of the disclosure described herein may be implemented, for example, in sequences other than those illustrated or described herein. In addition, the terms "including" and "having" and any variations thereof are intended to cover non-exclusive inclusions, for example, a process, method, system, product or device that includes a sequence of steps or units needs not be limited to those steps or units that are expressly listed, but may include steps or units that are not expressly listed or that are inherent to the process, method, product or device. In addition, "and/or" in the description and claims is used to indicate at least one of connected objects, for example, A and/or B and/or C, means that there are seven situations: there is A alone, there is B alone, there is C alone, there are both A and B, there are both B and C, there are both A and C, and there are A, B and C. Similarly, "at least one of A and B" in the specification and claims means that there is A alone, there is B alone, or there are both A and B.

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

**Claims**

1. A paging early indication (PEI) transmission method, comprising:

    determining, by a user equipment (UE), a resource location of a paging early indication based on at least one of a target Synchronization Signal and PBCH block (SSB), a target paging occasion (PO) and a target paging frame (PF), or based on a first frame number; and
    receiving or detecting at the resource location, by the UE, PEI transmitted by a network device;
    wherein the PEI is used to indicate an existence situation of paging.

2. The method according to claim 1, wherein the method further includes:
    determining at least one of the target SSB, the target PO and the target PF.

3. The method according to claim 2, wherein the determining the target SSB, includes:

determining the target SSB according to a target parameter;
wherein the target parameter includes the target PO or the target PF.

4.  The method according to claim 3, wherein the determining the target SSB according to a target parameter, includes:

    determining the target SSB according to a location of the target parameter and a distance between the target parameter and the target SSB;
    wherein the distance satisfies: greater than Y periods of SSBs and less than or equal to (Y+Y1) periods of SSBs, Y is the number of SSBs between the target SSB and the target parameter, Y1 $\geq$ 1.

5.  The method according to claim 4, further comprising determining Y according to at least one of the following:

    system message configuration;
    broadcast signaling configuration;
    agreement;
    determined based on a first interval;
    determined based on a first offset;
    determined according to the number of beams of the SSB;
    determined according to the number of beams of the PEI.

6.  The method according to any one of claims 1 to 3, wherein the determining the target PO or determining the target PF includes one of the following:

    determining the target PO or target PF according to a first parameter; wherein the first parameter includes at least one of a total number of PFs in each discontinuous reception (DRX) cycle, the number of POs included in each PF and UE_ID;
    determining the target PO or target PF according to a second parameter; wherein the second parameter is the number of POs corresponding to one PEI;
    determining the target PO or target PF according to a period of PEI;
    when one PEI is corresponding to one PO, the target PO is a PO that the UE needs to monitor, and the target PF is a PF corresponding to the PO that the UE needs to monitor.

7.  The method according to claim 1, wherein the target PF is one of multiple PFs corresponding to the PEI.

8.  The method according to claim 1, wherein the determining the resource location of the PEI according to at least one of the target SSB, target PO and target PF, includes:

    determining the resource location of the PEI according to a resource location of the target SSB, or the target PO or the target PF, and the first offset;
    wherein the first offset is an offset between the resource location of the PEI and the resource location of the target SSB, or the target PO or the target PF.

9.  The method according to claim 8, wherein the resource location of the PEI includes at least one of the following:

    start location of the PEI;
    end location of the PEI;
    monitoring start location of the PEI;
    monitoring end location of the PEI.

10. The method according to claim 9, wherein the method further includes:
    when the resource location of the PEI includes the start location of the PEI and/or the monitoring start location of the PEI, determining the end location or monitoring end location of the PEI based on the start location and/or monitoring start location of the PEI as well as duration of the PEI.

11. The method according to claim 8, wherein the first offset is less than a period length of the target SSB; or,
    the first offset is proportional to a period of the target SSB.

12. The method according to claim 1, wherein the method further includes:

determining whether the resource location satisfies a first condition;

if the first condition is not satisfied, updating the resource location to be a difference between the resource location and the period of the SSB.

13. The method according to claim 12, wherein the first condition includes: a distance between the resource location and a resource location of the target PO or target PF is greater than or equal to a first interval.

14. The method according to claim 1, wherein the PEI includes X beams, and the resource location of the PEI include: X resource locations corresponding to the PEI of the X beams;

the receiving or detecting at the resource location, by the UE, PEI transmitted by a network device, includes:

when a first resource location of the X resource locations overlaps with a resource location of a first signal, receiving or detecting the PEI at a second resource location;

wherein the second resource location is a first resource location after the first resource location.

15. The method according to claim 1, wherein the method further includes:
determining a first frame number, wherein the first frame number is a frame number of a radio frame where the PEI is located.

16. The method according to claim 1 or 15, wherein the method further includes:

determining a first index, wherein the first index is an index of the PEI;

wherein the determining the resource location of the paging early indication based on the first frame number, includes:

determining the resource location of the PEI according to the first frame number and the first index.

17. The method according to claim 15, wherein the determining a first frame number, includes:
determining the first frame number according to a third parameter, wherein the third parameter includes at least one of a second interval, a paging frame offset, DRX cycle, a total number of PFs in each DRX cycle, the number of POs included in each PF, the number of POs corresponding to one PEI, and UE_ID.

18. The method according to claim 17, wherein the first frame number is related to a product of a fourth parameter, a fifth parameter and a sixth parameter;

wherein the fourth parameter is related to at least one of the DRX cycle and the total number of PFs in each DRX cycle;

the fifth parameter is related to at least one of UE ID, the total number of PFs in each DRX cycle, and the sixth parameter;

the sixth parameter is related to at least one of the number of POs corresponding to one PEI and the number of POs included in each PF.

19. The method according to claim 18, wherein a result of modulo operation of a sum of the first frame number, the second interval and the paging frame offset, and the DRX cycle, is equal to a product of the fourth parameter, the fifth parameter and the sixth parameter.

20. The method according to claim 17, wherein the second interval is the number of radio frames between the first frame number and the target PF.

21. The method according to claim 16, wherein the determining the first index, includes:

determining the first index according to a seventh parameter, wherein the seventh parameter includes at least one of: UE_ID, the total number of PFs in each DRX cycle, and the number of POs included in each PF, and the number of POs corresponding to one PEI;

or,

determining the first index based on an index of PO, the number of POs included in each PF, and the number of POs corresponding to one PEI.

22. A paging early indication (PEI) transmission method, comprising:

determining, by a network device, a resource location of a paging early indication based on at least one of a target Synchronization Signal and PBCH block (SSB), a target paging occasion (PO) and a target paging frame (PF), or based on a first frame number;

transmitting at the resource location, by the network device, a PEI to a user equipment (UE);

wherein the PEI is used to indicate an existence situation of paging.

23. The method according to claim 22, wherein the method further includes: determining at least one of the target SSB, the target PO and the target PF.

24. The method according to claim 23, wherein the determining the target SSB, includes:

determining the target SSB according to a target parameter;

wherein the target parameter includes the target PO or the target PF.

25. The method according to claim 24, wherein the determining the target SSB according to a target parameter, includes:

determining the target SSB according to a location of the target parameter and a distance between the target parameter and the target SSB;

wherein the distance satisfies: greater than Y periods of SSBs and less than or equal to (Y+Y1) periods of SSBs, Y is the number of SSBs between the target SSB and the target parameter, $Y1 \geq 1$.

26. The method according to claim 25, further comprising determining Y according to at least one of the following:

system message configuration;

broadcast signaling configuration;

agreement;

determined based on a first interval;

determined based on a first offset;

determined according to the number of beams of the SSB;

determined according to the number of beams of the PEI.

27. The method according to any one of claims 22 to 24, wherein the determining the target PO or determining the target PF includes one of the following:

determining the target PO or target PF according to a first parameter; wherein the first parameter includes at least one of a total number of PFs in each discontinuous reception (DRX) cycle, the number of POs included in each PF and UE_ID;

determining the target PO or target PF according to a second parameter; wherein the second parameter is the number of POs corresponding to one PEI;

determining the target PO or target PF according to a period of PEI;

when one PEI is corresponding to one PO, the target PO is a corresponding PO when the network device transmits PDCCH scrambled by a paging radio network temporary identifier (P-RNTI) for paging the UE, and the target PF is corresponding PF when the network device transmits PDCCH scrambled by a paging radio network temporary identifier (P-RNTI) for paging the UE.

28. The method according to claim 23, wherein the target PF is one of multiple PFs corresponding to the PEI.

29. The method according to claim 22, wherein the determining the resource location of the PEI according to at least one of the target SSB, target PO and target PF, includes:

determining the resource location of the PEI according to a resource location of the target SSB, or the target PO or the target PF, and the first offset;

wherein the first offset is an offset between the resource location of the PEI and the resource location of the target SSB, or the target PO or the target PF.

30. The method according to claim 29, wherein the resource location of the PEI includes at least one of the following:

start location of the PEI;

end location of the PEI;
monitoring start location of the PEI;
monitoring end location of the PEI.

31. The method according to claim 30, wherein the method further includes:
when the resource location of the PEI includes the start location of the PEI and/or the monitoring start location of the PEI, determining the end location or monitoring end location of the PEI based on the start location and/or monitoring start location of the PEI as well as duration of the PEI.

32. The method according to claim 29, wherein the first offset is less than a period length of the target SSB; or,
the first offset is proportional to a period of the target SSB.

33. The method according to claim 22, wherein the method further includes:

   determining whether the resource location satisfies a first condition;
   if the first condition is not satisfied, updating the resource location to be a difference between the resource location and the period of the SSB.

34. The method according to claim 33, wherein the first condition includes: a distance between the resource location and a resource location of the target PO or target PF is greater than or equal to a first interval.

35. The method according to claim 22, wherein the PEI includes X beams, and the resource location of the PEI include:
X resource locations corresponding to the PEI of the X beams;
the transmitting at the resource location, PEI to the UE, includes:

   when a first resource location of the X resource locations overlaps with a resource location of a first signal, transmitting the PEI at a second resource location;
   wherein the second resource location is a first resource location after the first resource location.

36. The method according to claim 22, wherein the method further includes:
determining a first frame number, wherein the first frame number is a frame number of a radio frame where the PEI is located.

37. The method according to claim 22 or 36, wherein the method further includes:

   determining a first index, wherein the first index is an index of the PEI;
   wherein the determining the resource location of the paging early indication based on the first frame number, includes:
   determining the resource location of the PEI according to the first frame number and the first index.

38. The method according to claim 23, wherein the determining a first frame number, includes:
determining the first frame number according to a third parameter, wherein the third parameter includes at least one of a second interval, a paging frame offset, DRX cycle, a total number of PFs in each DRX cycle, the number of POs included in each PF, the number of POs corresponding to one PEI, and UE_ID.

39. The method according to claim 38, wherein the first frame number is related to a product of a fourth parameter, a fifth parameter and a sixth parameter;

   wherein the fourth parameter is related to at least one of the DRX cycle and the total number of PFs in each DRX cycle;
   the fifth parameter is related to at least one of UE ID, the total number of PFs in each DRX cycle, and the sixth parameter;
   the sixth parameter is related to at least one of the number of POs corresponding to one PEI and the number of POs included in each PF.

40. The method according to claim 39, wherein a result of modulo operation of a sum of the first frame number, the second interval and the paging frame offset, and the DRX cycle, is equal to a product of the fourth parameter, the fifth parameter and the sixth parameter.

**41.** The method according to claim 38, wherein the second interval is the number of radio frames between the first frame number and the target PF.

**42.** The method according to claim 37, wherein the determining the first index, includes:

determining the first index according to a seventh parameter, wherein the seventh parameter includes at least one of: UE_ID, the total number of PFs in each DRX cycle, and the number of POs included in each PF, and the number of POs corresponding to one PEI;
or,
determining the first index based on an index of PO, the number of POs included in each PF, and the number of POs corresponding to one PEI.

**43.** A user equipment (UE), comprising: a memory, a transceiver and a processor;
wherein the memory is used to store a computer program; the transceiver is used to transmit and receive data under the control of the processor; the processor is used to read the computer programs in the memory and perform the following operations:

determining a resource location of a paging early indication (PEI) based on at least one of a target Synchronization Signal and PBCH block (SSB), a target paging occasion (PO) and a target paging frame (PF), or based on a first frame number; and
receiving or detecting at the resource location, a PEI transmitted by a network device;
wherein the PEI is used to indicate an existence situation of paging.

**44.** The user equipment according to claim 43, wherein the processor is used to read the computer programs in the memory and perform the following operations:
determining at least one of the target SSB, the target PO and the target PF.

**45.** The user equipment according to claim 44, wherein the processor is used to read the computer programs in the memory and perform the following operations:

determining the target SSB according to a target parameter;
wherein the target parameter includes the target PO or the target PF.

**46.** The user equipment according to claim 45, wherein the processor is used to read the computer programs in the memory and perform the following operations:

determining the target SSB according to a location of the target parameter and a distance between the target parameter and the target SSB;
wherein the distance satisfies: greater than Y periods of SSBs and less than or equal to (Y+Y1) periods of SSBs, Y is the number of SSBs between the target SSB and the target parameter, Y1 ≥ 1;
wherein the method further includes determining Y according to at least one of the following:

system message configuration;
broadcast signaling configuration;
agreement;
determined based on a first interval;
determined based on a first offset;
determined according to the number of beams of the SSB;
determined according to the number of beams of the PEI.

**47.** The user equipment according to any one of claims 43 to 45, wherein the determining the target PO or determining the target PF includes one of the following:

determining the target PO or target PF according to a first parameter; wherein the first parameter includes at least one of a total number of PFs in each discontinuous reception (DRX) cycle, the number of POs included in each PF and UE_ID;
determining the target PO or target PF according to a second parameter; wherein the second parameter is the number of POs corresponding to one PEI;

determining the target PO or target PF according to a period of PEI;
when one PEI is corresponding to one PO, the target PO is a PO that the UE needs to monitor, and the target PF is a PF corresponding to the PO that the UE needs to monitor.

48. The user equipment according to claim 43, wherein the processor is used to read the computer programs in the memory and perform the following operations:

determining the resource location of the PEI according to a resource location of the target SSB, or the target PO or the target PF, and the first offset;
wherein the first offset is an offset between the resource location of the PEI and the resource location of the target SSB, or the target PO or the target PF;
wherein the resource location of the PEI includes at least one of the following:

start location of the PEI;
end location of the PEI;
monitoring start location of the PEI;
monitoring end location of the PEI.

49. The user equipment according to claim 48, wherein the processor is used to read the computer programs in the memory and perform the following operations:
when the resource location of the PEI includes the start location of the PEI and/or the monitoring start location of the PEI, determining the end location or monitoring end location of the PEI based on the start location and/or monitoring start location of the PEI as well as duration of the PEI.

50. The user equipment according to claim 48, wherein the first offset is less than a period length of the target SSB; or, the first offset is proportional to a period of the target SSB.

51. The user equipment according to claim 43, wherein the processor is used to read the computer programs in the memory and perform the following operations:

determining whether the resource location satisfies a first condition;
if the first condition is not satisfied, updating the resource location to be a difference between the resource location and the period of the SSB.

52. The user equipment according to claim 51, wherein the first condition includes: a distance between the resource location and a resource location of the target PO or target PF is greater than or equal to a first interval.

53. The user equipment according to claim 43, wherein the PEI includes X beams, and the resource location of the PEI include: X resource locations corresponding to the PEI of the X beams;
the processor is used to read the computer programs in the memory and perform the following operations:

when a first resource location of the X resource locations overlaps with a resource location of a first signal, receiving or detecting the PEI at a second resource location;
wherein the second resource location is a first resource location after the first resource location.

54. The user equipment according to claim 43, wherein the processor is used to read the computer programs in the memory and perform the following operations:
determining a first frame number, wherein the first frame number is a frame number of a radio frame where the PEI is located.

55. The user equipment according to claim 43 or 44, wherein the processor is used to read the computer programs in the memory and perform the following operations:

determining a first index, wherein the first index is an index of the PEI;
wherein the processor determining the resource location of the paging early indication based on the first frame number, includes:
determining the resource location of the PEI according to the first frame number and the first index.

**56.** The user equipment according to claim 54, wherein the processor is used to read the computer programs in the memory and perform the following operations:
determining the first frame number according to a third parameter, wherein the third parameter includes at least one of a second interval, a paging frame offset, DRX cycle, a total number of PFs in each DRX cycle, the number of POs included in each PF, the number of POs corresponding to one PEI, and UE_ID.

**57.** The user equipment according to claim 56, wherein the first frame number is related to a product of a fourth parameter, a fifth parameter and a sixth parameter;

wherein the fourth parameter is related to at least one of the DRX cycle and the total number of PFs in each DRX cycle;
the fifth parameter is related to at least one of UE ID, the total number of PFs in each DRX cycle, and the sixth parameter;
the sixth parameter is related to at least one of the number of POs corresponding to one PEI and the number of POs included in each PF.

**58.** The user equipment according to claim 57, wherein a result of modulo operation of a sum of the first frame number, the second interval and the paging frame offset, and the DRX cycle, is equal to a product of the fourth parameter, the fifth parameter and the sixth parameter.

**59.** The user equipment according to claim 55, wherein the processor is used to read the computer programs in the memory and perform the following operations:

determining the first index according to a seventh parameter, wherein the seventh parameter includes at least one of: UE_ID, the total number of PFs in each DRX cycle, and the number of POs included in each PF, and the number of POs corresponding to one PEI;
or,
determining the first index based on an index of PO, the number of POs included in each PF, and the number of POs corresponding to one PEI.

**60.** A network device, comprising: a memory, a transceiver, and a processor; wherein the memory is used to store a computer program; the transceiver is used to transmit and receive data under the control of the processor; the processor is used to read the computer programs in the memory and perform the following operations: determining a resource location of a paging early indication based on at least one of a target Synchronization Signal and PBCH block (SSB), a target paging occasion (PO) and a target paging frame (PF), or based on a first frame number;

the transceiver is used to transmit at the resource location, a PEI to a user equipment (UE);
wherein the PEI is used to indicate an existence situation of paging.

**61.** The network device according to claim 60, wherein the processor is used to read the computer programs in the memory and perform the following operations:
determining at least one of the target SSB, the target PO and the target PF.

**62.** The network device according to claim 61, wherein the processor is used to read the computer programs in the memory and perform the following operations:

determining the target SSB according to a target parameter;
wherein the target parameter includes the target PO or the target PF.

**63.** The network device according to claim 62, wherein the processor is used to read the computer programs in the memory and perform the following operations:

determining the target SSB according to a location of the target parameter and a distance between the target parameter and the target SSB;
wherein the distance satisfies: greater than Y periods of SSBs and less than or equal to (Y+Y1) periods of SSBs, Y is the number of SSBs between the target SSB and the target parameter, Y1 ≥ 1.
wherein the method further includes determining Y according to at least one of the following:

system message configuration;
broadcast signaling configuration;
agreement;
determined based on a first interval;
determined based on a first offset;
determined according to the number of beams of the SSB;
determined according to the number of beams of the PEI.

64. The network device according to any one of claims 60 to 63, wherein the determining the target PO or determining the target PF includes one of the following:

determining the target PO or target PF according to a first parameter; wherein the first parameter includes at least one of a total number of PFs in each discontinuous reception (DRX) cycle, the number of POs included in each PF and UE_ID;
determining the target PO or target PF according to a second parameter; wherein the second parameter is the number of POs corresponding to one PEI;
determining the target PO or target PF according to a period of PEI;
when one PEI is corresponding to one PO, the target PO is a corresponding PO when the network device transmits PDCCH scrambled by a paging radio network temporary identifier (P-RNTI) for paging the UE, and the target PF is corresponding PF when the network device transmits PDCCH scrambled by a paging radio network temporary identifier (P-RNTI) for paging the UE.

65. The network device according to claim 60, wherein the processor is used to read the computer programs in the memory and perform the following operations:

determining the resource location of the PEI according to a resource location of the target SSB, or the target PO or the target PF, and the first offset;
wherein the first offset is an offset between the resource location of the PEI and the resource location of the target SSB, or the target PO or the target PF;
wherein the resource location of the PEI includes at least one of the following:

start location of the PEI;
end location of the PEI;
monitoring start location of the PEI;
monitoring end location of the PEI.

66. The network device according to claim 65, wherein the processor is used to read the computer programs in the memory and perform the following operations:
when the resource location of the PEI includes the start location of the PEI and/or the monitoring start location of the PEI, determining the end location or monitoring end location of the PEI based on the start location and/or monitoring start location of the PEI as well as duration of the PEI.

67. The network device according to claim 65, wherein the first offset is less than a period length of the target SSB; or, the first offset is proportional to a period of the target SSB.

68. The network device according to claim 60, wherein the processor is used to read the computer programs in the memory and perform the following operations:

determining whether the resource location satisfies a first condition;
if the first condition is not satisfied, updating the resource location to be a difference between the resource location and the period of the SSB.

69. The network device according to claim 68, wherein the first condition includes: a distance between the resource location and a resource location of the target PO or target PF is greater than or equal to a first interval.

70. The network device according to claim 60, wherein the PEI includes X beams, and the resource location of the PEI include: X resource locations corresponding to the PEI of the X beams;
the processor is used to read the computer programs in the memory and perform the following operations:

when a first resource location of the X resource locations overlaps with a resource location of a first signal, transmitting the PEI at a second resource location;

wherein the second resource location is a first resource location after the first resource location.

71. The network device according to claim 60, wherein the processor is used to read the computer programs in the memory and perform the following operations:
determining a first frame number, wherein the first frame number is a frame number of a radio frame where the PEI is located.

72. The network device according to claim 60 or 71, wherein the processor is used to read the computer programs in the memory and perform the following operations:

determining a first index, wherein the first index is an index of the PEI;
wherein the determining the resource location of the paging early indication based on the first frame number, includes:
determining the resource location of the PEI according to the first frame number and the first index.

73. The network device according to claim 71, wherein the processor is used to read the computer programs in the memory and perform the following operations:
determining the first frame number according to a third parameter, wherein the third parameter includes at least one of a second interval, a paging frame offset, DRX cycle, a total number of PFs in each DRX cycle, the number of POs included in each PF, the number of POs corresponding to one PEI, and UE_ID.

74. The network device according to claim 73, wherein the first frame number is related to a product of a fourth parameter, a fifth parameter and a sixth parameter;

wherein the fourth parameter is related to at least one of the DRX cycle and the total number of PFs in each DRX cycle;
the fifth parameter is related to at least one of UE ID, the total number of PFs in each DRX cycle, and the sixth parameter;
the sixth parameter is related to at least one of the number of POs corresponding to one PEI and the number of POs included in each PF.

75. The network device according to claim 74, wherein a result of modulo operation of a sum of the first frame number, the second interval and the paging frame offset, and the DRX cycle, is equal to a product of the fourth parameter, the fifth parameter and the sixth parameter.

76. The network device according to claim 72, wherein the processor is used to read the computer programs in the memory and perform the following operations:

determining the first index according to a seventh parameter, wherein the seventh parameter includes at least one of UE_ID, the total number of PFs in each DRX cycle, and the number of POs included in each PF, and the number of POs corresponding to one PEI;
or,
determining the first index based on an index of PO, the number of POs included in each PF, and the number of POs corresponding to one PEI.

77. A paging early indication (PEI) transmission apparatus, comprising:

a first determining unit configured to determine a resource location of a paging early indication based on at least one of a target Synchronization Signal and PBCH block (SSB), a target paging occasion (PO) and a target paging frame (PF), or based on a first frame number;
a detection unit configured to receive or detect, at the resource location, PEI transmitted by a network device;
wherein the PEI is used to indicate an existence situation of paging.

78. A paging early indication (PEI) transmission apparatus, comprising:

a second determination unit configured to determine a resource location of the paging early indication based on at least one of a target Synchronization Signal and PBCH block (SSB), a target paging occasion (PO) and a target paging frame (PF), or based on a first frame number;
a transmission unit configured to transmit the PEI to a user equipment at the resource location;
wherein the PEI is used to indicate an existence situation of paging.

79. A processor-readable storage medium, comprising a computer program stored thereon; wherein the computer program, when executed by a processor, causes the processor to implement the steps of the paging early indication transmission method according to any one of claims 1 to 21, or implement the steps of the paging early indication transmission method according to any one of claims 22 to 42.

determining, by UE, a resource location of PEI based on at least one of SSB, PO and PF, or based on a first frame number

11

receiving or detecting at the resource location, by the UE, PEI transmitted by the network device; where the PEI is used to indicate an existence situation of paging

12

FIG. 1

target PO

PO

20ms

20ms

20ms

20ms

FIG. 2

S
S
B target SSB

PO

40ms

20ms

FIG. 3

FIG. 4

FIG. 5

FIG. 6

FIG. 7

FIG. 8

FIG. 9a

PO

Paging cycle

SFN for PEI

X=2

PEI

PO1 PO2

time

j

i

FIG. 9b

| | |
|---|---|
| determining, by network device, a resource location of PE) based on at least one of SSB, PO and PF, or based on a first frame number | 101 |

| | |
|---|---|
| transmitting at the resource location, by the network device, a PEI to a user equipment; where the PEI is used to indicate an existence situation of paging | 102 |

FIG. 10

first determining unit — 111

110

detection unit — 112

FIG. 11

FIG. 12

FIG. 13

FIG. 14

## INTERNATIONAL SEARCH REPORT

| International application No. |
|---|
| **PCT/CN2022/107917** |

**A.    CLASSIFICATION OF SUBJECT MATTER**

H04W 68/00(2009.01)i;  H04W 72/00(2009.01)i;  H04W 52/02(2009.01)i

According to International Patent Classification (IPC) or to both national classification and IPC

**B.    FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT, ENTXT, CNKI, 3GPP: 寻呼提前指示, 寻呼早期指示, 同步信号块, 目标, 寻呼机会, 寻呼帧, 帧号, 资源, 位置, PEI, paging early indication, SSB, target, paging occasion, paging frame, frame number, resource, location, position

**C.    DOCUMENTS CONSIDERED TO BE RELEVANT**

| Category* | Citation of document, with indication, where appropriate, of the relevant passages | Relevant to claim No. |
|---|---|---|
| X | NTT DOCOMO, INC. "Discussion on paging enhancements (R1-2009187)" *3GPP TSG RAN WG1 #103-e*, 02 November 2020 (2020-11-02), pp. 4-5 | 1-79 |
| X | CN 112136349 A (MEDIATEK INC.) 25 December 2020 (2020-12-25) description, paragraphs [0023]-[0072] | 1-79 |
| X | CN 113163476 A (ZTE CORP.) 23 July 2021 (2021-07-23) description, paragraphs [0040]-[0241] | 1-79 |
| A | US 2012122495 A1 (WENG, J. et al.) 17 May 2012 (2012-05-17) entire document | 1-79 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 September 2022** | **14 October 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2022/107917** |

| Patent document cited in search report | | | Publication date (day/month/year) | Patent family member(s) | | | Publication date (day/month/year) |
| --- | --- | --- | --- | --- | --- | --- | --- |
| CN | 112136349 | A | 25 December 2020 | TW | 202046786 | A | 16 December 2020 |
| | | | | US | 2022070783 | A1 | 03 March 2022 |
| | | | | WO | 2020216242 | A1 | 29 October 2020 |
| | | | | TW | 753411B1 | B1 | 21 January 2022 |
| CN | 113163476 | A | 23 July 2021 | None | | | |
| US | 2012122495 | A1 | 17 May 2012 | CA | 2750554 | A1 | 11 May 2012 |
| | | | | EP | 2453710 | A1 | 16 May 2012 |
| | | | | US | 2012122495 | A1 | 17 May 2012 |
| | | | | EP | 2453710 | B1 | 30 October 2013 |
| | | | | CA | 2750554 | C | 14 October 2014 |
| | | | | US | 8897818 | B2 | 25 November 2014 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110901344X

- CN 202111165827